# EUROPEAN PATENT APPLICATION

(11) **EP 4 300 429 A1**
(43) Date of publication of application: **03.01.2024**
(21) Application number: 22759418.1
(22) Date of filing: 14.02.2022
(51) Int. Cl.: G06T 15/20

(54) **IMAGE PROCESSING DEVICE, IMAGE PROCESSING METHOD, AND PROGRAM**

(30) Priority: 26.02.2021 JP 2021031213
(71) Applicant: FUJIFILM Corporation, Tokyo 106-8620 (JP)
(72) Inventor: MIYATA, Masahiko, Saitama-shi, Saitama 331-9624 (JP); AOKI, Takashi, Saitama-shi, Saitama 331-9624 (JP); MURAKAMI, Yasunori, Saitama-shi, Saitama 331-9624 (JP)
(74) Representative: Hughes, Andrea Michelle
(86) International application number: PCT/JP2022/005746
(87) International publication number: WO 2022/181379

(57) **Abstract**

An image processing apparatus includes a processor and a memory connected to or built in the processor. The processor acquires a first virtual viewpoint image generated based on a plurality of captured images, acquires viewpoint information, acquires positional information of an object imaged in the captured image, and acquires a second virtual viewpoint image in which an object image showing the object is included based on the viewpoint information and the positional information.

## Description

### BACKGROUND OF THE INVENTION

### 1. Field of the Invention

The technology of the present disclosure relates to an image processing apparatus, an image processing method, and a program.

### 2. Description of the Related Art

JP2020-003883A discloses an image generation apparatus including an image acquisition unit that acquires image data based on imaging from a plurality of directions by a plurality of cameras that images an imaging target region, an information acquisition unit that acquires viewpoint information indicating a virtual viewpoint, a generation unit that generates a virtual viewpoint image according to the virtual viewpoint indicated by the viewpoint information based on the image data acquired by the image acquisition unit and the viewpoint information acquired by the information acquisition unit, and a generation unit that generates the virtual viewpoint image by deforming a shape of a specific object, which is positioned in the imaging target region, in a three-dimensional space according to a position of the virtual viewpoint.

JP2014-041259A discloses an advertisement distribution apparatus comprising a reception unit that receives a display request including a viewpoint condition and an advertisement information, an advertisement frame setting unit that sets an advertisement frame according to the viewpoint condition in video data of any viewpoint position generated based on imaging data in which the viewpoint positions are different, an advertisement information setting unit that sets the advertisement information received by the reception unit in the advertisement frame set by the advertisement frame setting unit, and a video transmission unit that transmits the video data of any viewpoint position in which the advertisement information is set in the advertisement frame to a terminal device.

### SUMMARY OF THE INVENTION

One embodiment according to the technology of the present disclosure provides an image processing apparatus, an image processing method, and a program which can show an object image to a viewer of a virtual viewpoint image.

A first aspect according to the technology of the present disclosure relates to an image processing apparatus comprising a processor, and a memory connected to or built in the processor, in which the processor acquires a first virtual viewpoint image generated based on a plurality of captured images, acquires viewpoint information, acquires positional information of an object imaged in the captured image, and acquires a second virtual viewpoint image in which an object image showing the object is included based on the viewpoint information and the positional information.

A second aspect according to the technology of the present disclosure relates to the image processing apparatus according to the first aspect, in which the processor acquires the viewpoint information by receiving the viewpoint information, and performs first control of including the object image in the second virtual viewpoint image by deciding the received viewpoint information based on the positional information.

A third aspect according to the technology of the present disclosure relates to the image processing apparatus according to the second aspect, in which the viewpoint information includes a first viewpoint path that is received.

A fourth aspect according to the technology of the present disclosure relates to the image processing apparatus according to the second aspect, in which the viewpoint information is information for specifying a region shown by the second virtual viewpoint image, and the processor acquires the viewpoint information by receiving the viewpoint information within a range in which a position specified from the positional information is included in the region.

A fifth aspect according to the technology of the present disclosure relates to the image processing apparatus according to the first aspect, in which, in a case in which a position specified from the positional information is not included in a region specified based on the viewpoint information, the processor changes at least one of the positional information or a position of the object image.

A sixth aspect according to the technology of the present disclosure relates to the image processing apparatus according to the first aspect, in which, in a case in which the viewpoint information and the positional information satisfy a first condition, the processor changes at least one of the positional information or a position of the object image.

A seventh aspect according to the technology of the present disclosure relates to the image processing apparatus according to any one of the first to sixth aspects, in which the processor performs second control of including the object image in the second virtual viewpoint image by moving the object image based on the positional information.

An eighth aspect according to the technology of the present disclosure relates to the image processing apparatus according to any one of the first to seventh aspects, in which the processor performs third control of including the object image in the second virtual viewpoint image by changing the viewpoint information based on the positional information.

A ninth aspect according to the technology of the present disclosure relates to the image processing apparatus according to the eighth aspect, in which the viewpoint information includes at least one of starting point positional information for specifying a position of a starting point of a second viewpoint path, end point positional information for specifying a position of an end point of the second viewpoint path, first visual line direction information for specifying a first visual line direction, or angle-of-view information for specifying an angle of view.

A tenth aspect according to the technology of the present disclosure relates to the image processing apparatus according to the eighth or ninth aspect, in which the viewpoint information includes second visual line direction information for specifying a second visual line direction, and the third control includes control of including the object image in the second virtual viewpoint image by changing the second visual line direction information based on the positional information at at least one of a position of a starting point of a third viewpoint path or a position of an end point of the third viewpoint path as the viewpoint information.

An eleventh aspect according to the technology of the present disclosure relates to the image processing apparatus according to any one of the second to fourth aspects, in which the second virtual viewpoint image includes a first subject image showing a subject, and the processor performs the first control within a range in which at least one of a size or a position of the first subject image in the second virtual viewpoint image satisfies a second condition.

A twelfth aspect according to the technology of the present disclosure relates to the image processing apparatus according to the seventh aspect, in which the processor performs the second control based on at least one of a size or a position of a second subject image showing a subject in a third virtual viewpoint image generated based on the viewpoint information.

A thirteenth aspect according to the technology of the present disclosure relates to the image processing apparatus according to any one of the eighth to tenth aspects, in which the processor performs the third control based on at least one of a size or a position of a third subject image showing a subject in a third virtual viewpoint image generated based on the viewpoint information.

A fourteenth aspect according to the technology of the present disclosure relates to the image processing apparatus according to the second, third, fourth, or eleventh aspect, in which a priority of displaying is given to the object, and the processor performs the first control based on the priority in a case in which a plurality of the objects given with the priorities are imaged in the captured image.

A fifteenth aspect according to the technology of the present disclosure relates to the image processing apparatus according to the seventh or twelfth aspect, in which a priority of displaying is given to the object, and the processor performs the second control based on the priority in a case in which a plurality of the objects given with the priorities are imaged in the captured image.

A sixteenth aspect according to the technology of the present disclosure relates to the image processing apparatus according to the eighth, ninth, tenth, or thirteenth aspect, in which a priority of displaying is given to the object, and the processor performs the third control based on the priority in a case in which a plurality of the objects given with the priorities are imaged in the captured image.

A seventeenth aspect according to the technology of the present disclosure relates to the image processing apparatus according to any one of the fourteenth to sixteenth aspects, in which the priority is decided based on an attribute of the object.

An eighteenth aspect according to the technology of the present disclosure relates to the image processing apparatus according to any one of the fourteenth to seventeenth aspects, in which the processor decides the priority based on an attribute of a user who sets the viewpoint information.

A nineteenth aspect according to the technology of the present disclosure relates to the image processing apparatus according to any one of the fourteenth to eighteenth aspects, in which the processor decides the priority based on a state of an imaging target imaged by a plurality of imaging apparatuses.

A twentieth aspect according to the technology of the present disclosure relates to the image processing apparatus according to any one of the first to nineteenth aspects, in which the processor changes a display aspect of the object image based on the viewpoint information and the positional information.

A twenty-first aspect according to the technology of the present disclosure relates to the image processing apparatus according to any one of the first to twentieth aspects, in which the processor outputs data for displaying the second virtual viewpoint image on a display for a time which is decided according to the viewpoint information.

A twenty-second aspect according to the technology of the present disclosure relates to an image processing method comprising acquiring a first virtual viewpoint image generated based on a plurality of captured images, acquiring viewpoint information, acquiring positional information of an object imaged in the captured image, and acquiring a second virtual viewpoint image in which an object image showing the object is included based on the viewpoint information and the positional information.

A twenty-third aspect according to the technology of the present disclosure relates to a program causing a computer to execute a process comprising acquiring a first virtual viewpoint image generated based on a plurality of captured images, acquiring viewpoint information, acquiring positional information of an object imaged in the captured image, and acquiring a second virtual viewpoint image in which an object image showing the object is included based on the viewpoint information and the positional information.

### BRIEF DESCRIPTION OF THE DRAWINGS

Fig. 1 is a conceptual diagram showing an example of a configuration of an image processing system.
Fig. 2 is a conceptual diagram showing an example of a schematic configuration of a soccer stadium and an example of a schematic configuration of a rectangular body that defines three-dimensional coordinates for specifying a position inside the soccer stadium.
Fig. 3 is a block diagram showing an example of a hardware configuration of an electric system of a user device.
Fig. 4 is a block diagram showing an example of a function of a main unit of a CPU of an image processing apparatus.
Fig. 5 is a conceptual diagram showing an example of processing contents of a reception screen generation unit, and an example of display contents of a display of the user device.
Fig. 6 is a screen view showing an example of a display aspect of a reception screen in a case in which an operation mode of the user device is a viewpoint setting mode.
Fig. 7 is a screen view showing an example of a display aspect of the reception screen in a case in which the operation mode of the user device is a gaze point setting mode.
Fig. 8 is a block diagram showing an example of contents of viewpoint information and an example of an aspect in which the viewpoint information is transmitted from the user device to the image processing apparatus.
Fig. 9 is a conceptual diagram showing an example of processing contents of a virtual viewpoint image generation unit.
Fig. 10 is a conceptual diagram showing an example of a viewpoint at which an advertisement sign can be seen and a viewpoint at which an advertisement sign cannot be viewed.
Fig. 11 is a conceptual diagram showing an example of processing contents of a virtual viewpoint image generation unit.
Fig. 12 is a conceptual diagram showing an example of an aspect in which a virtual viewpoint video is transmitted from the image processing apparatus to the user device.
Fig. 13 is a screen view showing an example of an aspect in which the virtual viewpoint video and the reception screen are displayed on the display of the user device.
Fig. 14 is a flowchart showing an example of a flow of image generation processing.
Fig. 15 is a conceptual diagram showing a second modification example.
Fig. 16 is a conceptual diagram showing a third modification example.
Fig. 17 is a conceptual diagram showing a fourth modification example.
Fig. 18 is a conceptual diagram showing a fifth modification example.
Fig. 19 is a conceptual diagram showing a sixth modification example.
Fig. 20 is a conceptual diagram showing a seventh modification example.
Fig. 21 is a conceptual diagram showing the seventh modification example.
Fig. 22 is a conceptual diagram showing an eighth modification example.
Fig. 23 is a conceptual diagram showing a ninth modification example.
Fig. 24 is a conceptual diagram showing an example of an aspect in which an image generation processing program stored in a storage medium is installed in a computer of the image processing apparatus.

### DESCRIPTION OF THE PREFERRED EMBODIMENTS

An example of an embodiment of an image processing apparatus, an image processing method, and a program according to the technology of the present disclosure will be described with reference to the accompanying drawings.

First, the terms used in the description below will be described.

CPU refers to an abbreviation of "central processing unit". GPU refers to an abbreviation of "graphics processing unit". TPU refers to an abbreviation of "tensor processing unit". NVM refers to an abbreviation of "non-volatile memory". RAM refers to an abbreviation of "random access memory". SSD refers to an abbreviation of "solid state drive". HDD refers to an abbreviation of "hard disk drive". EEPROM refers to an abbreviation of "electrically erasable and programmable read only memory". I/F refers to an abbreviation of "interface". ASIC refers to an abbreviation of "application specific integrated circuit". PLD refers to an abbreviation of "programmable logic device". FPGA refers to an abbreviation of "field-programmable gate array". SoC refers to an abbreviation of "system-on-a-chip". CMOS refers to an abbreviation of "complementary metal oxide semiconductor". CCD refers to an abbreviation of "charge coupled device". EL refers to an abbreviation of "electro-luminescence". LAN refers to an abbreviation of "local area network". USB refers to an abbreviation of "universal serial bus". "HMD" refers to an abbreviation of "head mounted display". LTE refers to an abbreviation of "long term evolution". 5G refers to an abbreviation of "5th generation (wireless technology for digital cellular networks)". TDM refers to an abbreviation of "time-division multiplexing". GNSS refers to an abbreviation of "global navigation satellite system". AI refers to an abbreviation of "artificial intelligence".

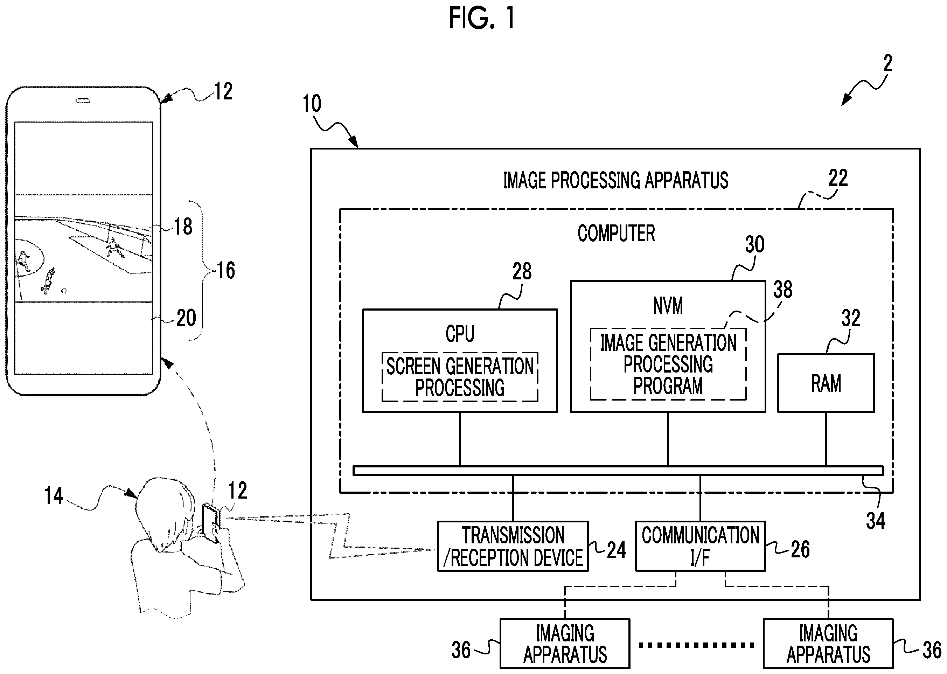

As an example, as shown in Fig. 1, an image processing system 2 comprises an image processing apparatus 10 and a user device 12.

In the present embodiment, a server is applied as an example of the image processing apparatus 10. The server is realized by a main frame, for example. It should be noted that this is merely an example, and for example, the server may be realized by network computing, such as cloud computing, fog computing, edge computing, or grid computing. In addition, the image processing apparatus 10 may be a personal computer, a plurality of personal computers, a plurality of servers, a combination of the personal computer and the server, and the like.

Moreover, in the present embodiment, a smartphone is applied as an example of the user device 12. It should be noted that the smartphone is merely an example, and, for example, a personal computer may be applied, or a portable multifunctional terminal, such as a tablet terminal or a head mounted display (hereinafter, referred to as an "HMD"), may be applied.

In addition, in the present embodiment, the image processing apparatus 10 and the user device 12 are connected in a communicable manner via, for example, a base station (not shown). The communication standards used in the base station include a wireless communication standard including a 5G standard and/or an LTE standard, a wireless communication standard including a WiFi (802.11) standard and/or a Bluetooth (registered trademark) standard, and a wired communication standard including a TDM standard and/or an Ethernet (registered trademark) standard.

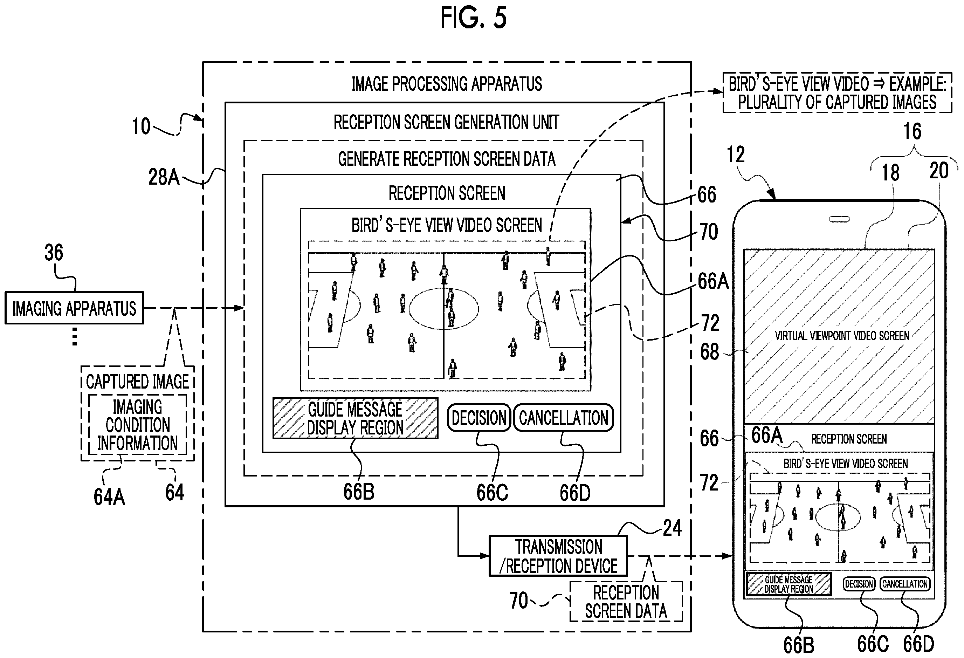

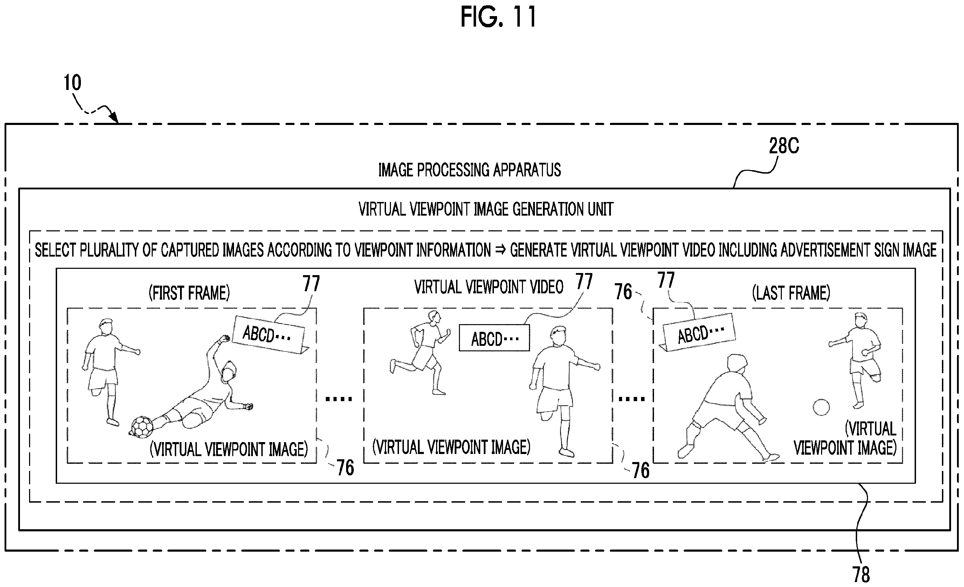

The image processing apparatus 10 acquires an image, and transmits the acquired image to the user device 12. Here, the image refers to, for example, a captured image 64 (see Fig. 5, and the like) obtained by being captured and an image generated based on the captured image 64 (see Fig. 5, and the like). Examples of the image generated based on the captured image (see Fig. 5 and the like) include a virtual viewpoint image 76 (see Fig. 11 and the like).

The user device 12 is used by a user 14. The user device 12 comprises a touch panel display 16. The touch panel display 16 is realized by a display 18 and a touch panel 20. Examples of the display 18 include an EL display (for example, an organic EL display or an inorganic EL display). It should be noted that the display is not limited to the EL display, and another type of display, such as a liquid crystal display, may be applied.

The touch panel display 16 is formed by superimposing the touch panel 20 on a display region of the display 18 or by forming an in-cell type in which a touch panel function is built in the display 18. It should be noted that the in-cell type is merely an example, and an out-cell type or an on-cell type may be applied.

The user device 12 executes processing according to an instruction received from the user by the touch panel 20 and the like. For example, the user device 12 exchanges various types of information with the image processing apparatus 10 in response to the instruction received from the user by the touch panel 20 and the like.

The user device 12 receives the image transmitted from the image processing apparatus 10, and displays the received image on the display 18. The user 14 views the image displayed on the display 18.

The image processing apparatus 10 comprises a computer 22, a transmission/reception device 24, and a communication I/F 26. The computer 22 is an example of a "computer" according to the technology of the present disclosure, and comprises a CPU 28, an NVM 30, and a RAM 32. The image processing apparatus 10 comprises a bus 34, and the CPU 28, the NVM 30, and the RAM 32 are connected via the bus 34. In the example shown in Fig. 1, one bus is shown as the bus 34 for convenience of illustration, but a plurality of buses may be used. In addition, the bus 34 may include a serial bus, or a parallel bus configured by a data bus, an address bus, a control bus, and the like.

The CPU 28 is an example of a "processor" according to the technology of the present disclosure. The CPU 28 controls the entire image processing apparatus 10. Various parameters and various programs are stored in the NVM 30. Examples of the NVM 30 include an EEPROM, an SSD, and/or an HDD. The RAM 32 is an example of a "memory" according to the technology of the present disclosure. Various types of information are transitorily stored in the RAM 32. The RAM 32 is used as a work memory by the CPU 28.

The transmission/reception device 24 is connected to the bus 34. The transmission/reception device 24 is a device including a communication processor (not shown), an antenna, and the like, and transmits and receives various types of information to and from the user device 12 via the base station (not shown) under the control of the CPU 28. That is, the CPU 28 exchanges various types of information with the user device 12 via the transmission/reception device 24.

The communication I/F 26 is realized by a device including an FPGA, for example. The communication I/F 26 is connected to a plurality of imaging apparatuses 36 via a LAN cable (not shown). The imaging apparatus 36 is an imaging device including a CMOS image sensor, and has an optical zoom function and/or a digital zoom function. It should be noted that, instead of the CMOS image sensor, another type of image sensor, such as a CCD image sensor, may be adopted.

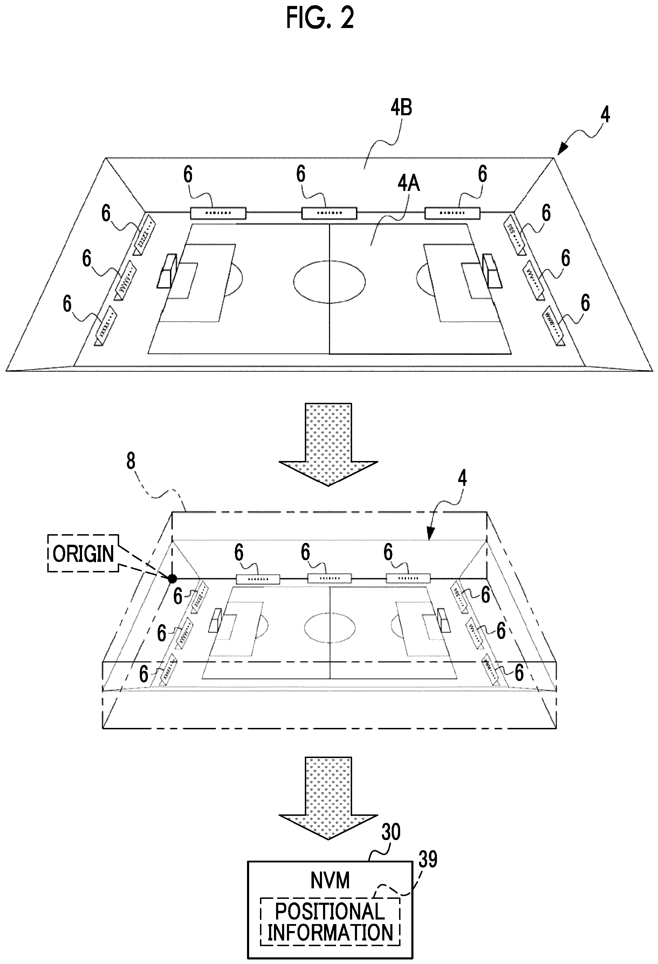

The plurality of imaging apparatuses 36 are installed, for example, in a soccer stadium 4 (see Fig. 2) and image a subject inside the soccer stadium 4. The captured image 64 (see Fig. 5 and the like) obtained by imaging the subject by the imaging apparatus 36 is used, for example, for the generation of the virtual viewpoint image 76 (see Fig. 11 and the like). Therefore, the plurality of imaging apparatuses 36 are installed at different locations inside the soccer stadium, respectively, that is, at locations at which a plurality of captured images 64 (see Fig. 5 and the like) for generating virtual viewpoint images 76 (see Fig. 11 and the like) are obtained. The soccer stadium 4 is a three-dimensional region including a soccer field 4A (see Fig. 2) and a spectator seat 4B (see Fig. 2) that is constructed to surround the soccer field 4A, and is an observation target of the user 14. An observer, that is, the user 14, can observe the inside of the soccer stadium 4 from the spectator seat or a place outside the soccer stadium 4 through the image displayed by the display 18 of the user device 12.

It should be noted that, here, as an example, the soccer stadium is described as an example as the place in which the plurality of imaging apparatuses 36 are installed, but the technology of the present disclosure is not limited to this. The place in which the plurality of imaging apparatuses 36 are installed may be any place as long as the place is a place in which the plurality of imaging apparatuses 36 can be installed, such as a baseball field, a rugby field, a curling field, an athletic field, a swimming pool, a concert hall, an outdoor music field, and a theater.

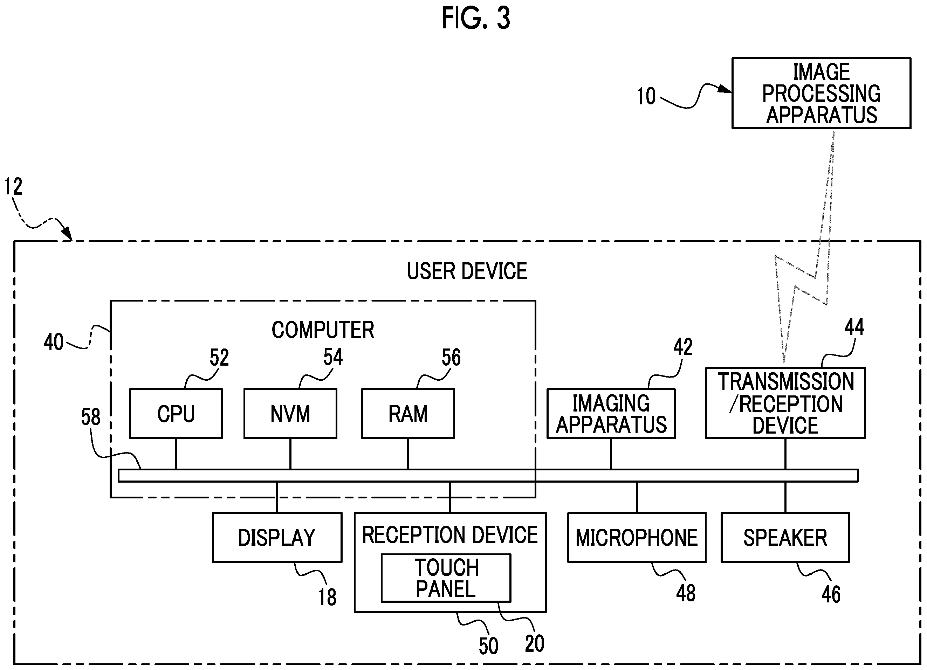

The communication I/F 26 is connected to the bus 34, and controls the exchange of various types of information between the CPU 28 and the plurality of imaging apparatuses 36. For example, the communication I/F 26 controls the plurality of imaging apparatuses 36 in response to a request from the CPU 28. The communication I/F 26 outputs the captured image 64 (see Fig. 3, Fig. 4, Fig. 8, and the like) obtained by being captured by each of the plurality of imaging apparatuses 36 to the CPU 28. It should be noted that, here, although the communication I/F 26 is described as an example of a wired communication I/F, a wireless communication I/F, such as a high-speed wireless LAN, may be applied.

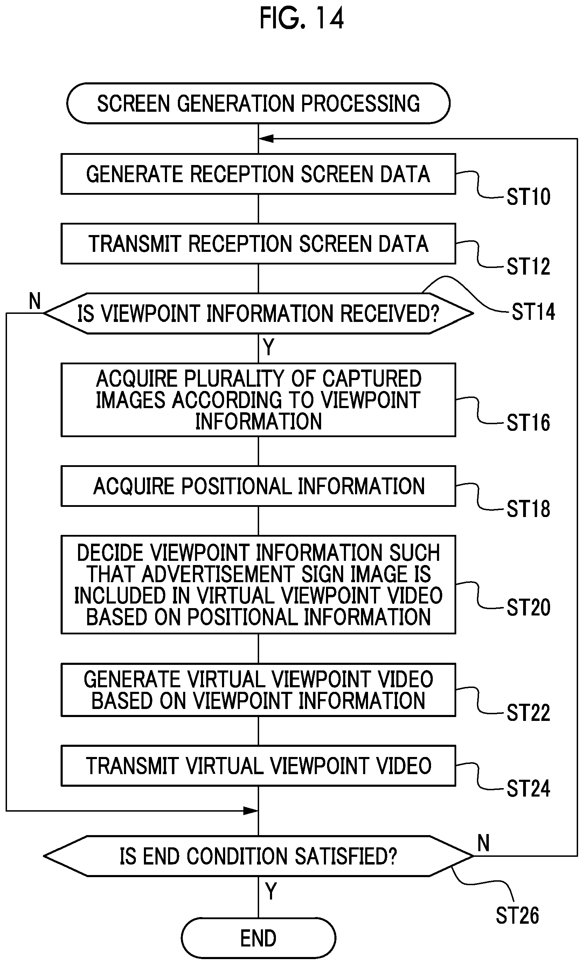

The NVM 30 stores an image generation processing program 38. The image generation processing program 38 is an example of a "program" according to the technology of the present disclosure. The CPU 28 performs image generation processing (see Fig. 14) by reading out the image generation processing program 38 from the NVM 30 and executing the image generation processing program 38 on the RAM 32.

As an example, as shown in Fig. 2, a plurality of advertisement signs 6 are installed in the vicinity of the soccer field 4A. On the advertisement sign 6, for example, information related to an advertiser is drawn as a character, a pattern, and/or a pattern. The advertisement sign 6 is an example of an "object" and a "subject" according to the technology of the present disclosure.

The coordinates for specifying the position inside the soccer stadium 4 are given to the soccer stadium 4. Here, as an example of the coordinates for specifying the position inside the soccer stadium 4, three-dimensional coordinates for specifying a position inside a rectangular body 8 with one apex of the rectangular body 8 that encloses the soccer stadium 4 as an origin are applied.

Positional information 39 is given to the plurality of advertisement signs 6. Examples of the positional information 39 include three-dimensional coordinates for specifying a size and a position of the advertisement sign 6 inside the soccer stadium 4. It should be noted that this is merely an example, and the positional information 39 may be information indicating the latitude, the longitude, and the altitude obtained by using a GNSS.

In addition, the installation positions of the plurality of imaging apparatuses 36 (see Fig. 1) inside the soccer stadium 4 can also be specified by the three-dimensional coordinates, and the three-dimensional coordinates are given to each of the imaging apparatuses 36.

As shown in Fig. 3 as an example, the user device 12 comprises the display 18, a computer 40, an imaging apparatus 42, a transmission/reception device 44, a speaker 46, a microphone 48, and a reception device 50. The computer 40 comprises a CPU 52, an NVM 54, and a RAM 56. The user device 12 comprises a bus 58, and the CPU 52, the NVM 54, and the RAM 56 are connected via the bus 58.

In the example shown in Fig. 3, one bus is shown as the bus 58 for convenience of illustration, but a plurality of buses may be used. In addition, the bus 58 may include a serial bus or a parallel bus configured by a data bus, an address bus, a control bus, and the like.

The CPU 52 controls the entire user device 12. Various parameters and various programs are stored in the NVM 54. Examples of the NVM 54 include an EEPROM. Various types of information are transitorily stored in the RAM 56. The RAM 56 is used as a work memory by the CPU 52. By reading out various programs from the NVM 54 and executing the various programs on the RAM 56, the CPU 52 performs processing according to the various programs.

The imaging apparatus 42 is an imaging device including a CMOS image sensor, and has an optical zoom function and/or a digital zoom function. It should be noted that, instead of the CMOS image sensor, another type of image sensor, such as a CCD image sensor, may be adopted. The imaging apparatus 42 is connected to the bus 58, and the CPU 52 controls the imaging apparatus 42. The captured image obtained by the imaging with the imaging apparatus 42 is acquired by the CPU 52 via the bus 58.

The transmission/reception device 44 is connected to the bus 58. The transmission/reception device 44 is a device including a communication processor (not shown), an antenna, and the like, and transmits and receives various types of information to and from the image processing apparatus 10 via the base station (not shown) under the control of the CPU 52. That is, the CPU 52 exchanges various types of information with the image processing apparatus 10 via the transmission/reception device 44.

The speaker 46 converts an electric signal into the sound. The speaker 46 is connected to the bus 58. The speaker 46 receives the electric signal output from the CPU 52 via the bus 58, converts the received electric signal into the sound, and outputs the sound obtained by the conversion from the electric signal to the outside of the user device 12.

The microphone 48 converts the collected sound into the electric signal. The microphone 48 is connected to the bus 58. The CPU 52 acquires the electric signal obtained by the conversion from the sound collected by the microphone 48 via the bus 58.

The reception device 50 receives an instruction from the user 14 or the like. Examples of the reception device 50 include the touch panel 20 and a hard key (not shown). The reception device 50 is connected to the bus 58, and the instruction received by the reception device 50 is acquired by the CPU 52.

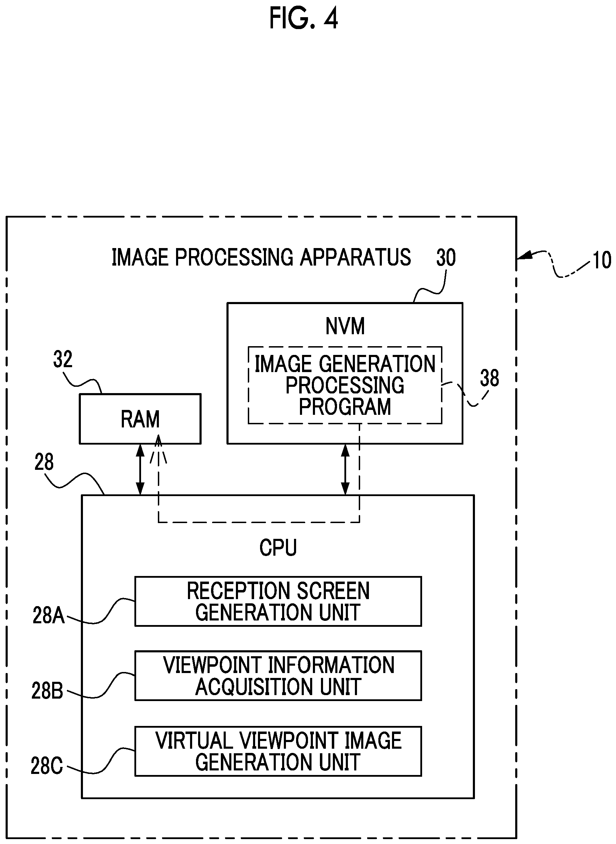

As shown in Fig. 4 as an example, by reading out the image generation processing program 38 from the NVM 30 and executing the image generation processing program 38 on the RAM 32, the CPU 28 is operated as a reception screen generation unit 28A, a viewpoint information acquisition unit 28B, and a virtual viewpoint image generation unit 28C.

As an example, as shown in Fig. 5, a reception screen 66 and a virtual viewpoint video screen 68 are displayed on the display 18 of the user device 12. In the example shown in Fig. 5, on the display 18, the reception screen 66 and the virtual viewpoint video screen 68 are displayed in an arranged manner. It should be noted that this is merely an example, and the reception screen 66 and the virtual viewpoint video screen 68 may be switched and displayed in response to the instruction given to the touch panel 20 by the user 14, or the reception screen 66 and the virtual viewpoint video screen 68 may be individually displayed by different display devices.

In addition, in the present embodiment, the reception screen 66 is displayed on the display 18 of the user device 12, but the technology of the present disclosure is not limited to this, and for example, the reception screen 66 may be displayed on a display connected to a device (for example, a personal computer) used by a person who creates or edits the virtual viewpoint video 78 (see Fig. 11).

The user device 12 acquires the virtual viewpoint video 78 (see Fig. 11) from the image processing apparatus 10 by performing communication with the image processing apparatus 10. The virtual viewpoint video 78 (see Fig. 11) acquired from the image processing apparatus 10 by the user device 12 is displayed on the virtual viewpoint video screen 68 of the display 18. In the example shown in Fig. 5, the virtual viewpoint video 78 is not displayed on the virtual viewpoint video screen 68.

The user device 12 performs communication with the image processing apparatus 10 to acquire reception screen data 70 indicating the reception screen 66 from the image processing apparatus 10. The reception screen 66 indicated by the reception screen data 70 acquired from the image processing apparatus 10 by the user device 12 is displayed on the display 18.

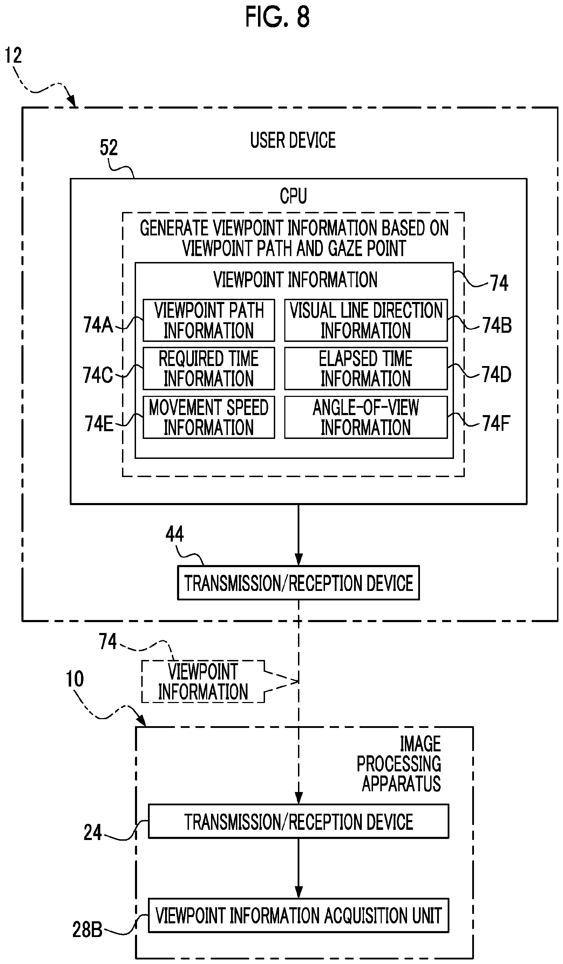

The reception screen 66 includes a bird's-eye view video screen 66A, a guide message display region 66B, a decision key 66C, and a cancellation key 66D, and various types of information required for generating the virtual viewpoint video 78 (see Fig. 8) is displayed on the reception screen 66. The user 14 gives an indication to the user device 12 with reference to the reception screen 66. The indication from the user 14 is received by the touch panel 20, for example.

A bird's-eye view video 72 is displayed on the bird's-eye view video screen 66A. The bird's-eye view video 72 is a moving image showing an aspect in a case in which the inside of the soccer stadium is observed from a bird's-eye view, and is generated based on the plurality of captured images 64 obtained by being captured by at least one of the plurality of imaging apparatuses 36. Examples of the bird's-eye view video 72 include a live coverage video.

Various messages indicating contents of an operation requested to the user 14 are displayed in the guide message display region 66B. The operation requested to the user 14 refers to, for example, an operation required for generating the virtual viewpoint video 78 (see Fig. 11) (for example, an operation of setting the viewpoint, an operation of setting the gaze point, and the like).

Display contents of the guide message display region 66B is switched according to an operation mode of the user device 12. For example, the user device 12 has, as the operation mode, a viewpoint setting mode in which the viewpoint is set and a gaze point setting mode in which the gaze point is set, and the display contents of the guide message display region 66B are different between the viewpoint setting mode and the gaze point setting mode.

Both the decision key 66C and the cancellation key 66D are soft keys. The decision key 66C is turned on by the user 14 in a case in which the indication received by the reception screen 66 is decided. The cancellation key 66D is turned on by the user 14 in a case in which the indication received by the reception screen 66 is cancelled.

The reception screen generation unit 28A acquires the plurality of captured images 64 from the plurality of imaging apparatuses 36. The captured image 64 includes an imaging condition information 64A. The imaging condition information 64A refers to information indicating an imaging condition. Examples of the imaging condition include three-dimensional coordinates for specifying the installation position of the imaging apparatus 36, an imaging direction by the imaging apparatus 36, an angle of view used in the imaging by the imaging apparatus 36, and a zoom magnification applied to the imaging apparatus 36.

The reception screen generation unit 28A generates the bird's-eye view video 72 based on the plurality of captured images 64 acquired from the plurality of imaging apparatuses 36. Then, the reception screen generation unit 28A generates data indicating the reception screen 66 including the bird's-eye view video 72, as the reception screen data 70.

The reception screen generation unit 28A outputs the reception screen data 70 to the transmission/reception device 24. The transmission/reception device 24 transmits the reception screen data 70 input from the reception screen generation unit 28A to the user device 12. The user device 12 receives the reception screen data 70 transmitted from the transmission/reception device 24 by the transmission/reception device 44 (see Fig. 3). The reception screen 66 indicated by the reception screen data 70 received by the transmission/reception device 44 is displayed on the display 18.

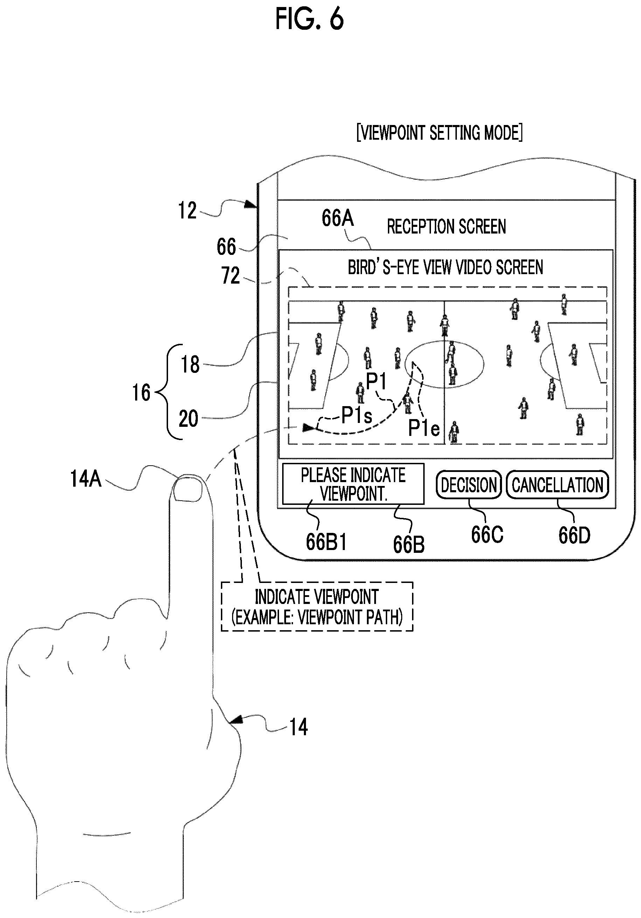

As shown in Fig. 6 as an example, in a case in which the operation mode of the user device 12 is the viewpoint setting mode, a message 66B1 is displayed in the guide message display region 66B of the reception screen 66. The message 66B1 is a message prompting the user 14 to indicate the viewpoint used for the generation of the virtual viewpoint video 78 (see Fig. 11). Here, the viewpoint refers to a virtual viewpoint for observing the inside of the soccer stadium 4. The virtual viewpoint does not refer to a position at which an actually existing camera, such as a physical camera that images the subject (for example, the imaging apparatus 36), is installed, but refer to a position at which a virtual camera that images the subject is installed.

The touch panel 20 receives an indication from the user 14 in a state in which the message 66B1 is displayed in the guide message display region 66B. In this case, the indication from the user 14 refers to an indication of the viewpoint. The viewpoint corresponds to a position of a pixel in the bird's-eye view video 72. The position of the pixel in the bird's-eye view video 72 corresponds to the position inside the soccer stadium 4 (see Fig. 2). The indication of the viewpoint is performed by the indication of the position of the pixel in the bird's-eye view video 72 by the user 14 via the touch panel 20. It should be noted that the viewpoint may have three-dimensional coordinates corresponding to a three-dimensional position in the bird's-eye view video 72. Any method can be used as a method of indicating the three-dimensional position. For example, the user 14 may directly input a three-dimensional coordinate position, or may designate the three-dimensional coordinate position by displaying two images showing the soccer stadium 4 seen from two planes perpendicular to each other and designating each pixel position.

In the example shown in Fig. 6, a viewpoint path P1, which is a path for observing the subject, is shown as an example of the viewpoint. The viewpoint path P1 is an example of a "first viewpoint path", a "second viewpoint path", and a "third viewpoint path" according to the technology of the present disclosure.

The viewpoint path P1 is an aggregation in which a plurality of viewpoints are linearly arranged from a starting point P1s to an end point P1e. The viewpoint path P1 is defined along a route (in the example shown in Fig. 6, a meandering route from the starting point P1s to the end point P1e) in which the user 14 slides (swipes) his/her fingertip 14A on a region corresponding to a display region of the bird's-eye view video 72 in the entire region of the touch panel 20. In addition, an observation time from the viewpoint path P1 (for example, a time of observation between two different viewpoints and/or a time of observation at a certain point in a stationary state) is defined by a speed of the slide performed with respect to the touch panel 20 in a case in which the viewpoint path P1 is formed via the touch panel 20, a time (for example, a long press time) to stay at one viewpoint on the viewpoint path P1, and the like.

In the example shown in Fig. 6, the decision key 66C is turned on in a case in which the viewpoint path P1 is settled, and the cancellation key 66D is turned on in a case in which the viewpoint path P1 is cancelled.

It should be noted that, in the example shown in Fig. 6, only the viewpoint path P1 is set, but this is merely an example, and a plurality of viewpoint paths may be set. In addition, the technology of the present disclosure is not limited to the viewpoint path, and a plurality of discontinuous viewpoints may be used, or one viewpoint may be used.

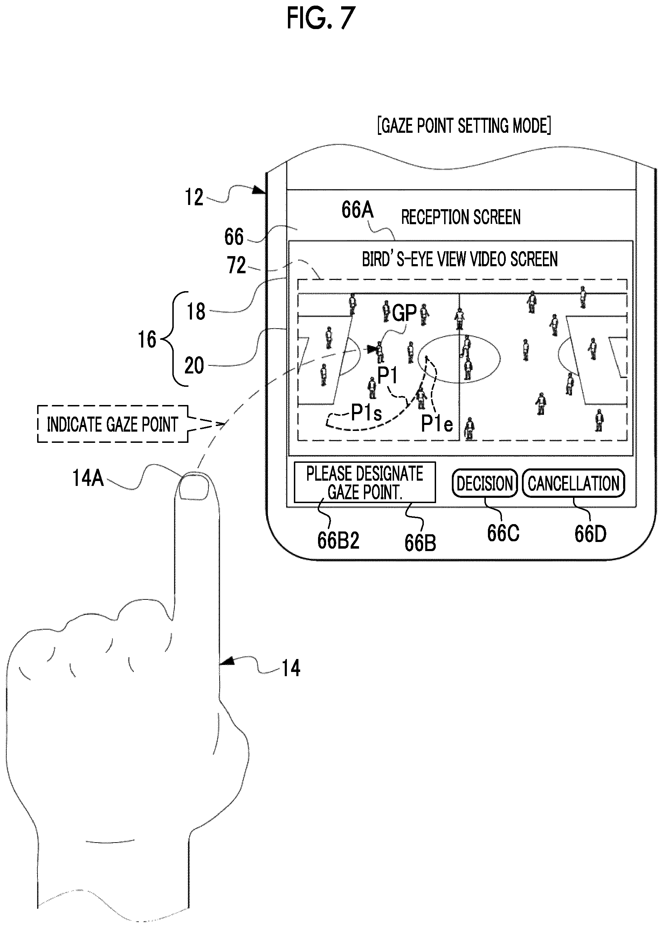

As shown in Fig. 7 as an example, in a case in which the operation mode of the user device 12 is the gaze point setting mode, a message 66B2 is displayed in the guide message display region 66B of the reception screen 66. The message 66B2 is a message prompting the user 14 to indicate the gaze point used for the generation of the virtual viewpoint video 78 (see Fig. 11). Here, the gaze point refers to a point that is virtually gazed in a case in which the inside of the soccer stadium is observed from the viewpoint. In a case in which the viewpoint and the gaze point are set, a virtual visual line direction (imaging direction of the virtual camera) is also uniquely decided. The virtual visual line direction refers to a direction from the viewpoint to the gaze point.

The touch panel 20 receives an indication from the user 14 in a state in which the message 66B2 is displayed in the guide message display region 66B. In this case, the indication from the user 14 refers to an indication of the gaze point. The gaze point corresponds to a position of a pixel in the bird's-eye view video 72. The position of the pixel in the bird's-eye view video 72 corresponds to the position inside the soccer stadium 4 (see Fig. 2). The indication of the gaze point is performed by the user 14 indicating the position of the pixel in the bird's-eye view video 72 via the touch panel 20. In the example shown in Fig. 7, a gaze point GP is shown. The gaze point GP is defined according to a location in which the user 14 touches his/her fingertip 14A on the region corresponding to the display region of the bird's-eye view video 72 in the entire region of the touch panel 20. In the example shown in Fig. 7, the decision key 66C is turned on in a case in which the gaze point GP is settled, and the cancellation key 66D is turned on in a case in which the gaze point GP is cancelled. It should be noted that the gaze point may have three-dimensional coordinates corresponding to a three-dimensional position in the bird's-eye view video 72. Any method can be used as a method of indicating the three-dimensional position, as in the indication of the viewpoint position.

It should be noted that, in the example shown in Fig. 7, only the gaze point GP is designated, but this is merely an example, and a plurality of gaze points may be used, or a path (gaze point path) in which a plurality of gaze points are linearly arranged may be used. One or a plurality of gaze point paths may be used.

As an example, as shown in Fig. 8, the CPU 52 of the user device 12 generates viewpoint information 74 based on the viewpoint path P1 and the gaze point GP. The viewpoint information 74 is information used for the generation of the virtual viewpoint video 78 (see Fig. 11). The viewpoint information 74 includes viewpoint path information 74A, visual line direction information 74B, required time information 74C, elapsed time information 74D, movement speed information 74E, and angle-of-view information 74F.

The viewpoint path information 74A is information for specifying the position of the pixel in the bird's-eye view video 72 of the viewpoint path P1 (see Fig. 6) settled in the viewpoint setting mode. Examples of the information for specifying the position of the pixel in the bird's-eye view video 72 of the viewpoint path P1 include coordinates for specifying a position of a pixel of the viewpoint path P1 in the bird's-eye view video 72. The viewpoint path P1 includes the starting point P1s and the end point P1e (see Fig. 6). Therefore, the viewpoint path information 74A also includes starting point positional information (hereinafter, also simply referred to as a "starting point positional information") for specifying a position of the starting point P1s and end point positional information (hereinafter, also simply referred to as an "end point positional information") for specifying a position of the end point P1e. Examples of the starting point positional information include coordinates for specifying a position of a pixel of the starting point P1s in the bird's-eye view video 72. Examples of the end point positional information include coordinates for specifying a position of a pixel of the end point P1e in the bird's-eye view video 72.

The visual line direction information 74B is information for specifying the visual line direction. The visual line direction refers, for example, a direction in which the subject is observed from the viewpoint path P1 to the gaze point GP. For example, the visual line direction information 74B is decided for each viewpoint included in the viewpoint path information 74A, and is defined by information for specifying the position of the viewpoint (for example, coordinates for specifying a position of a pixel of the viewpoint in the bird's-eye view video 72) and information for specifying a position of the gaze point GP settled in the gaze point setting mode (for example, coordinates for specifying a position of a pixel of the gaze point GP in the bird's-eye view video 72). It should be noted that, here, the visual line direction is an example of a "first visual line direction" and a "second visual line direction" according to the technology of the present disclosure, and the visual line direction information 74B is an example of "first visual line direction information" and "second visual line direction information" according to the technology of the present disclosure.

The required time information 74C is information indicating a required time (hereinafter, also simply referred to as a "required time"), which is required for a viewpoint for observing the subject on the viewpoint path P1 to move from a first position to a second position different from the first position. Here, the first position refers to the starting point P1s (see Fig. 6 and Fig. 7), and the second position refers to, for example, the end point P1e (see Fig. 6 and Fig. 7). It should be noted that this is merely an example, and the first position may be the starting point P1s (see Fig. 6 and Fig. 7) and the second position may be a position of the intermediate viewpoint on the viewpoint path P1, or the first position may be a position of the intermediate viewpoint in the viewpoint path P1 and the second position may be the end point P1e (see Fig. 6 and Fig. 7).

The elapsed time information 74D is information indicating a position of the viewpoint for observing the subject on the viewpoint path P1 and the elapsed time corresponding to the position of the viewpoint. The elapsed time corresponding to the position of the viewpoint (hereinafter, also simply referred to as an "elapsed time") refers to, for example, a time in which the viewpoint is stationary at a position of a certain viewpoint on the viewpoint path P1.

The movement speed information 74E is information for specifying a movement speed of the position of the viewpoint for observing the subject on the viewpoint path P1. The movement speed of the position of the viewpoint (hereinafter, also simply referred to as a "movement speed") refers to, for example, the speed of the slide performed on the touch panel 20 in a case in which the viewpoint path P1 is formed via the touch panel 20. The movement speed information 74E is associated with each viewpoint in the viewpoint path P 1.

The angle-of-view information 74F is information for specifying an angle of view (hereinafter, also simply referred to as an "angle of view"). Here, the angle of view refers to an angle of view for observing the subject on the viewpoint path P1. In the present embodiment, the angle of view is fixed to a predetermined angle (for example, 100 degrees). It should be noted that this is merely an example, and the angle of view may be decided according to the movement speed. In this case, for example, within a range in which an upper limit (for example, 150 degrees) and a lower limit (for example, 15 degrees) of the angle of view are decided, the angle of view is narrower as the movement speed is lower. In addition, the angle of view may be narrower as the movement speed is higher. In addition, the angle of view may be decided according to the elapsed time. In this case, for example, the angle of view need only be minimized in a case in which the elapsed time exceeds a first predetermined time (for example, 3 seconds), or the angle of view need only be maximized in a case in which the elapsed time exceeds the first predetermined time. In addition, the angle of view may be decided according to the indication received by the reception device 50. In this case, the reception device 50 need only receive the indications regarding the position of the viewpoint of which the angle of view is changed and the changed angle of view on the viewpoint path P 1.

The CPU 52 outputs the viewpoint information 74 to the transmission/reception device 44. The transmission/reception device 44 transmits the viewpoint information 74 input from the CPU 52 to the image processing apparatus 10. The transmission/reception device 24 of the image processing apparatus 10 receives the viewpoint information 74.

The viewpoint information acquisition unit 28B of the image processing apparatus 10 acquires the viewpoint information. In the example shown in Fig. 8, the viewpoint information acquisition unit 28B receives the viewpoint information 74 received by the transmission/reception device 24 to acquire the viewpoint information 74. That is, the transmission/reception device 24 outputs the received viewpoint information 74 to the viewpoint information acquisition unit 28B, and the viewpoint information acquisition unit 28B acquires the viewpoint information 74 by receiving the input of the viewpoint information 74 from the transmission/reception device 24.

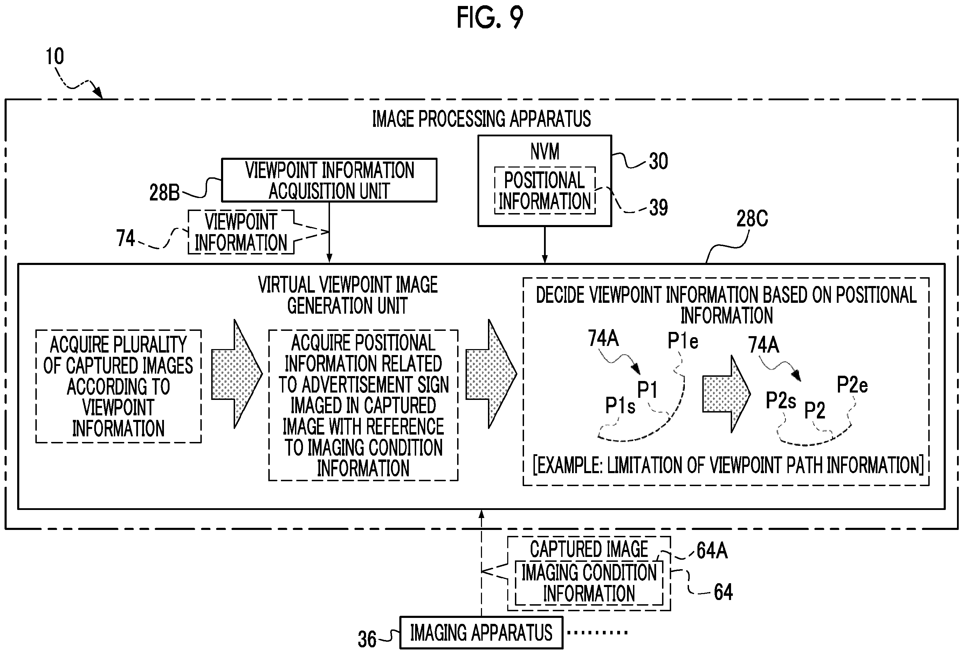

As an example, as shown in Fig. 9, the virtual viewpoint image generation unit 28C acquires the plurality of captured images 64 from the plurality of imaging apparatuses 36 according to the viewpoint information 74. That is, the virtual viewpoint image generation unit 28C acquires the plurality of captured images 64 from the plurality of imaging apparatuses 36, which are used for the generation of the virtual viewpoint image 76 (see Fig. 11), which is an image showing an aspect of the subject in a case in which the subject is observed according to the viewpoint information 74.

The virtual viewpoint image generation unit 28C acquires the positional information 39 of the advertisement sign 6 (see Fig. 2) imaged in the captured image 64 from the NVM 30. More specifically, the virtual viewpoint image generation unit 28C acquires the positional information 39 related to the advertisement sign 6 of which the entirety is imaged in the captured image 64 from the NVM 30 with reference to the imaging condition information 64A included in each captured image 64. It should be noted that, here, the form example is described in which the positional information 39 related to the advertisement sign 6 is acquired from the NVM 30 on the condition that the entire advertisement sign 6 is imaged in the captured image 64, but this is merely an example, and the positional information 39 related to the advertisement sign 6 may be acquired from the NVM 30 on a condition that a part (for example, 50% or more) of the advertisement sign 6 is imaged in the captured image 64.

The virtual viewpoint image generation unit 28C acquires the virtual viewpoint image 76 (see Fig. 11) which is generated based on the plurality of captured images 64. Here, the "virtual viewpoint image 76" is an example of a "first virtual viewpoint image" according to the technology of the present disclosure.

In addition, the virtual viewpoint image generation unit 28C acquires the virtual viewpoint image 76 including an advertisement sign image 77 (see Fig. 11) showing the advertisement sign 6 based on the viewpoint information 74 and the positional information 39. Here, the virtual viewpoint image 76 including the advertisement sign image 77 is an example of a "second virtual viewpoint image" and a "third virtual viewpoint image" according to the technology of the present disclosure. The advertisement sign image 77 is an example of an "object image", a "first subject image", a "second subject image", and a "third subject image" according to the technology of the present disclosure.

Here, the virtual viewpoint image generation unit 28C performs first control (hereinafter, also simply referred to as "first control") of including the advertisement sign image 77 in the virtual viewpoint image 76 by deciding the viewpoint information 74 received by the viewpoint information acquisition unit 28B based on the positional information 39. Examples of the decision of the viewpoint information 74 include a limitation of the viewpoint path information 74A. That is, the virtual viewpoint image generation unit 28C limits the viewpoint path information 74A such that the viewpoint path P1 is shortened within a range in which the advertisement sign 6 is imaged in the virtual viewpoint image 76. In the example shown in Fig. 9, a viewpoint path P2 is shown, which is obtained by shortening the viewpoint path P1 to a range in which the advertisement sign 6 is imaged in the virtual viewpoint image 76. The viewpoint path P2 includes a starting point P2s and an end point P2e. The starting point P2s is a viewpoint at the same position as the starting point P1s, and the end point P2e is a viewpoint at a position in the middle of the viewpoint path P1.

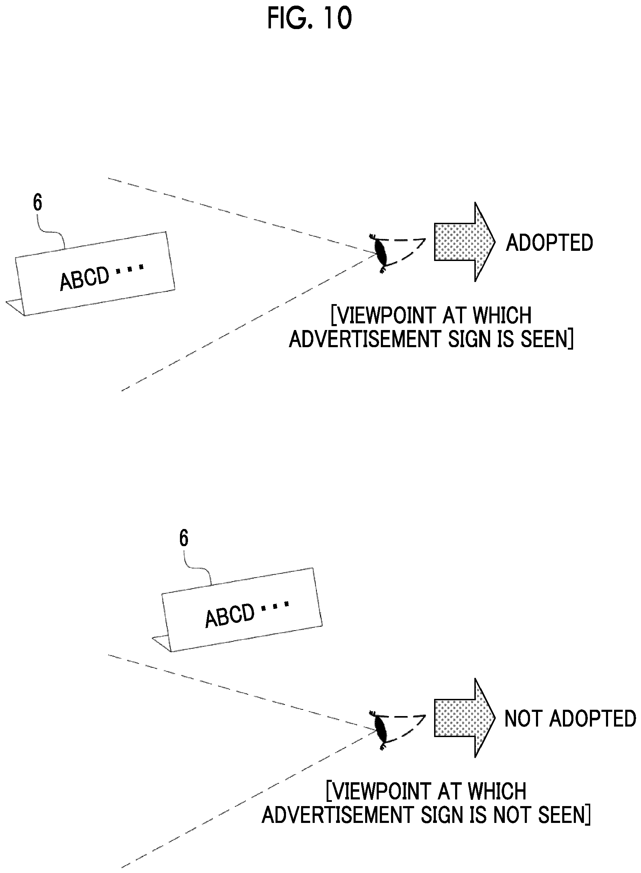

In this way, in a case in which the viewpoint path P1 is changed to the viewpoint path P2, for example, as shown in Fig. 10, among the plurality of viewpoints included in the viewpoint path P2, a viewpoint at which the advertisement sign 6 is seen is adopted, and a viewpoint at which the advertisement sign 6 is not seen is not adopted. That is, the viewpoint information 74 for generating the virtual viewpoint image 76 in which the advertisement sign image 77 (Fig. 11) is included is created by the virtual viewpoint image generation unit 28C.

It should be noted that, in a case in which the viewpoint path P1 is changed to the viewpoint path P2, the viewpoint path information 74A indicating the viewpoint path P2 may be transmitted from the virtual viewpoint image generation unit 28C to the user device 12. In this case, the viewpoint path information 74A may be received by the user device 12, and the viewpoint path P2 indicated by the received viewpoint path information 74A may be displayed on the bird's-eye view video screen 66A. By seeing the viewpoint path P2 displayed on the bird's-eye view video screen 66A, the user 14 can visually recognize that the viewpoint initially indicated by himself/herself is limited.

In addition, here, the viewpoint path information 74A is limited by shortening the length of the viewpoint path P1, but the technology of the present disclosure is not limited to this. For example, the viewpoint path information 74A may be limited such that a direction of the viewpoint path P1 is fixed in one direction, or the viewpoint path information 74A may be limited such that the position of the starting point P1s, the position of the end point P1e, and/or the position of the intermediate point of the viewpoint path P1 is fixed.

As shown in Fig. 11 as an example, the virtual viewpoint image generation unit 28C selects the plurality of captured images 64 according to the viewpoint information 74 decided based on the positional information 39 (for example, the viewpoint information 74 including the viewpoint path information 74A indicating the viewpoint path P2 shown in Fig. 9). Further, the virtual viewpoint image generation unit 28C generates the virtual viewpoint image 76, which is the image showing the aspect of the subject in a case in which the subject is observed from the viewpoint specified by the viewpoint information 74 (for example, the viewpoint information 74 including the viewpoint path information 74A indicating the viewpoint path P2 shown in Fig. 9), based on the selected plurality of captured images 64.

For example, the virtual viewpoint image generation unit 28C generates the virtual viewpoint images 76 of a plurality of frames according to the viewpoint path P2 (see Fig. 9). That is, the virtual viewpoint image generation unit 28C generates the virtual viewpoint image 76 for each viewpoint on the viewpoint path P2. The virtual viewpoint image 76 of the plurality of frames includes the advertisement sign image 77. The virtual viewpoint image generation unit 28C generates the virtual viewpoint video 78 including the advertisement sign image 77 by arranging the virtual viewpoint images 76 of the plurality of frames in a time series. The virtual viewpoint video 78 generated in this manner is data to be displayed on the display 18 of the user device 12 for a time decided according to the viewpoint information 74 (for example, the viewpoint information 74 including the viewpoint path information 74A showing the viewpoint path P2 shown in Fig. 9).

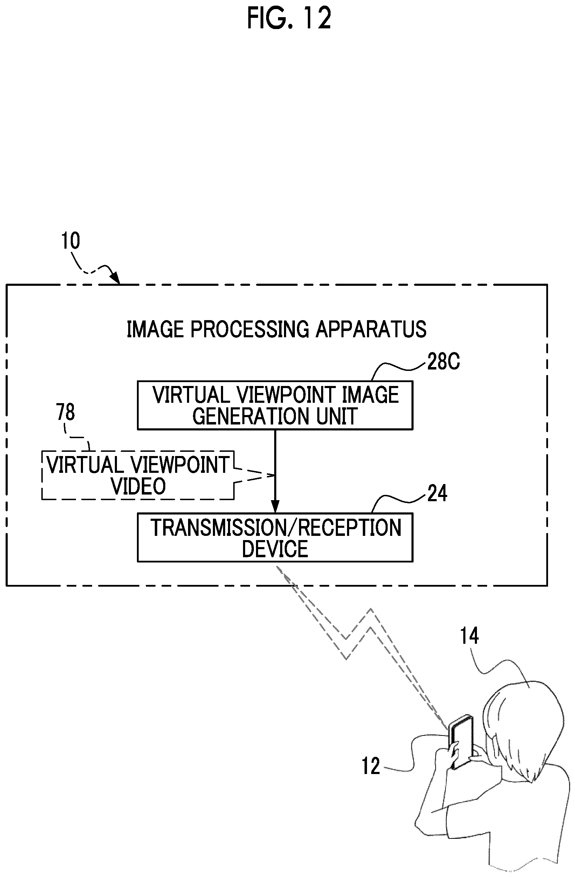

As an example, as shown in Fig. 12, the virtual viewpoint image generation unit 28C outputs the virtual viewpoint video 78 to the transmission/reception device 24. The transmission/reception device 24 transmits the virtual viewpoint video 78 input from the virtual viewpoint image generation unit 28C to the user device 12.

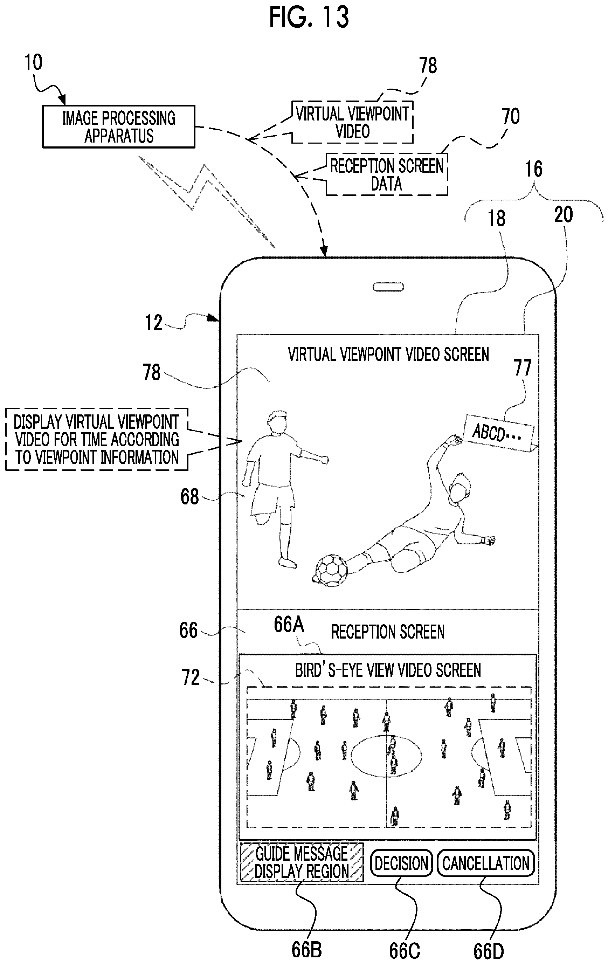

As an example, as shown in Fig. 13, the user device 12 receives the virtual viewpoint video 78 (see Fig. 3) by the transmission/reception device 44. The virtual viewpoint video 78 is a moving image in which the virtual viewpoint images 76 of the plurality of frames are arranged in a time series. The virtual viewpoint images 76 of the plurality of frames are displayed on the virtual viewpoint video screen 68 of the display 18 of the user device 12 at a predetermined frame rate (for example, several tens of frames/second) from the first frame to the last frame. The virtual viewpoint video 78 is displayed on the virtual viewpoint video screen 68 for the time corresponding to the viewpoint information 74 (for example, the viewpoint information 74 including the viewpoint path information 74A indicating the viewpoint path P2 shown in Fig. 9). As a result, the virtual viewpoint video 78 including the advertisement sign image 77 is viewed by the user 14.

Fig. 14 shows an example of a flow of image generation processing performed by the CPU 28 of the image processing apparatus 10. The flow of the image generation processing shown in Fig. 14 is an example of an image processing method according to the technology of the present disclosure.

In the image generation processing shown in Fig. 14, first, in step ST10, the reception screen generation unit 28A generates the reception screen data 70 based on the plurality of captured images 64 (see Fig. 5). After the processing of step ST10 is executed, the image generation processing shifts to step ST12.

In step ST12, the reception screen generation unit 28A causes the transmission/reception device 24 to transmit the reception screen data 70 generated in step ST10 to the user device 12. After the processing of step ST12 is executed, the image generation processing shifts to step ST14.

In a case in which the reception screen data 70 is transmitted from the image processing apparatus 10 to the user device 12 by executing the processing of step ST12, the user device 12 receives the reception screen data 70, and displays the reception screen 66 indicated by the received reception screen data 70 on the display 18 (see Fig. 5 to Fig. 7). In a case in which the reception screen 66 is displayed on the display 18 of the user device 12, the indications of the viewpoint, the gaze point, and the like are given to the user device 12 from the user 14 via the touch panel 20 (see Fig. 6 and Fig. 7). The CPU 52 of the user device 12 generates the viewpoint information 74 based on the viewpoint and the gaze point which are received by the touch panel 20, and transmits the generated viewpoint information 74 to the image processing apparatus 10 via the transmission/reception device 44 (see Fig. 8).

In step ST14, the viewpoint information acquisition unit 28B determines whether or not the viewpoint information 74 is received by the transmission/reception device 24. In step ST14, in a case in which the viewpoint information 74 is not received by the transmission/reception device 24, a negative determination is made, and the image generation processing shifts to step ST26. In step ST14, in a case in which the viewpoint information 74 is received by the transmission/reception device 24, a positive determination is made, and the image generation processing shifts to step ST16. The viewpoint information acquisition unit 28B acquires the viewpoint information 74 received by the transmission/reception device 24 (see Fig. 9).

In step ST16, the virtual viewpoint image generation unit 28C acquires the plurality of captured images 64 from the plurality of imaging apparatuses 36 according to the viewpoint information 74 acquired by the viewpoint information acquisition unit 28B. After the processing of step ST16 is executed, the image generation processing shifts to step ST18 (see Fig. 9).

In step ST18, the virtual viewpoint image generation unit 28C acquires the imaging condition information 64A from the plurality of captured images 64 acquired in step ST16, and acquires the positional information 39 related to the advertisement sign 6 imaged in the captured image 64 from the NVM 30 with reference to the acquired imaging condition information 64A (see Fig. 9). After the processing of step ST18 is executed, the image generation processing shifts to step ST20.

In step ST20, the virtual viewpoint image generation unit 28C decides the viewpoint information 74 such that the advertisement sign image 77 is included in the virtual viewpoint video 78 based on the positional information 39 acquired in step ST18 (see Fig. 9). After the processing of step ST20 is executed, the image generation processing shifts to step ST22.

In step ST22, the virtual viewpoint image generation unit 28C generates the virtual viewpoint video 78 based on the viewpoint information 74 decided in step ST20 (see Fig. 11). After the processing of step ST22 is executed, the image generation processing shifts to step ST24.

In step ST24, the virtual viewpoint image generation unit 28C transmits the virtual viewpoint video 78 generated in step ST22 to the user device 12 via the transmission/reception device 24 (see Fig. 12).

In a case in which the virtual viewpoint video 78 is transmitted from the image processing apparatus 10 to the user device 12 by executing the processing of step ST24, the user device 12 receives the virtual viewpoint video 78, and displays the received virtual viewpoint video 78 on the virtual viewpoint video screen 68 of the display 18 (see Fig. 13). The virtual viewpoint video 78 displayed on the virtual viewpoint video screen 68 is viewed by the user 14. After the processing of step ST24 is executed, the image generation processing shifts to step ST26.

In step ST26, the virtual viewpoint image generation unit 28C determines whether or not a condition for ending the image generation processing (hereinafter, referred to as an "end condition") is satisfied. A first example of the end condition is a condition in which an instruction to end the image generation processing is received by the reception device 50 (see Fig. 3). A second example of the end condition includes a condition in which the communication between the image processing apparatus 10 and one or more imaging apparatuses 36 decided in advance among the plurality of imaging apparatuses 36 is cut off. A third example of the end condition is a condition in which a second predetermined time (for example, 60 seconds) has elapsed without a positive determination made in step ST14.

In a case in which the end condition is not satisfied in step ST26, a negative determination is made, and the image generation processing shifts to step ST10. In step ST26, in a case in which the end condition is satisfied, a positive determination is made, and the image generation processing ends.

As described above, in the image processing apparatus 10 according to the present embodiment, the virtual viewpoint video 78 including the advertisement sign image 77 is acquired based on the positional information 39 of the advertisement sign 6 imaged in the captured image 64 and the viewpoint information 74. The virtual viewpoint video 78 acquired in this manner is displayed on the display 18. Since the advertisement sign image 77 is included in the virtual viewpoint video 78, the advertisement sign image 77 can be shown to the user 14 who is a viewer of the virtual viewpoint video 78.

In addition, in the image processing apparatus 10 according to the present embodiment, the viewpoint information 74 is acquired by the viewpoint information acquisition unit 28B receiving the viewpoint information 74, and the received viewpoint information 74 is decided based on the positional information 39. Here, the decision means, for example, that the viewpoint information 74 is limited. In this way, the viewpoint information 74 is decided based on the positional information 39, so that the advertisement sign image 77 is included in the virtual viewpoint video 78. Therefore, with the present configuration, the advertisement sign image 77 can be more easily included in the virtual viewpoint video 78 than in a case in which only the virtual viewpoint image 76 is generated irrespective of the position of the advertisement sign 6.

In addition, in the image processing apparatus 10 according to the present embodiment, the viewpoint path information 74A is decided based on the positional information 39. Here, the decision means, for example, that the viewpoint path information 74A is limited. Limiting the viewpoint path information 74A means, for example, that the viewpoint path information 74A related to the viewpoint path P1 is changed to the viewpoint path information A related to the viewpoint path P2 (see Fig. 9). In this way, the viewpoint path information 74A is decided based on the positional information 39, so that the advertisement sign image 77 is included in the virtual viewpoint video 78. Therefore, with the present configuration, the advertisement sign image 77 can be more easily included in the virtual viewpoint video 78 than in a case in which only the virtual viewpoint image 76 is generated irrespective of the position of the advertisement sign 6.

In addition, in the image processing apparatus 10 according to the present embodiment, the virtual viewpoint video 78 is displayed on the display 18 for the time which is decided according to the viewpoint information 74. Therefore, with the present configuration, the advertisement sign image 77 included in the virtual viewpoint video 78 can be shown to the user 14 for the time which is decided according to the viewpoint information 74.

### [First Modification Example]

In the embodiment described above, the form example is described in which the viewpoint information 74 is limited to the range in which the position specified from the positional information 39 by the virtual viewpoint image generation unit 28C is included in the region (region specified from the viewpoint information 74) indicated by the virtual viewpoint image 76, but the technology of the present disclosure is not limited to this. For example, the viewpoint information 74 may be acquired by receiving the viewpoint information 74 by the viewpoint information acquisition unit 28B within a range in which the position specified from the positional information 39 is included in the region (region specified from the viewpoint information 74) indicated by the virtual viewpoint image 76. Similarly, the gaze point GP may be received within a range in which the position specified from the positional information 39 is included in the region (region specified from the viewpoint information 74) indicated by the virtual viewpoint image 76. Also in this case, as in the embodiment described above, since the virtual viewpoint video 78 is generated according to the viewpoint information 74 and displayed on the display 18, the advertisement sign image 77 can be shown to the user 14 who is the viewer of the virtual viewpoint video 78.

### [Second Modification Example]

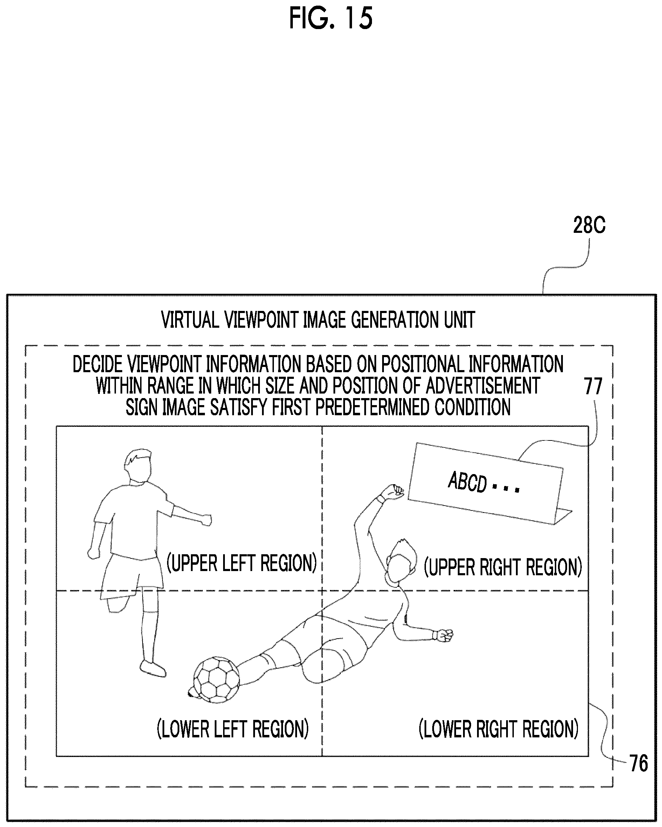

In the embodiment described above, control of including the advertisement sign image 77 in the virtual viewpoint image 76 irrespective of the size and the position of the advertisement sign image 77 in the virtual viewpoint image 76 is described as an example of the first control, but the technology of the present disclosure is not limited to this. For example, the virtual viewpoint image generation unit 28C may perform, as the first control, control of including the advertisement sign image 77 in the virtual viewpoint image 76 by deciding the viewpoint information 74 based on the positional information 39 within a range in which both the size and the position of the advertisement sign image 77 in the virtual viewpoint image 76 satisfy a first predetermined condition. Here, the first predetermined condition is an example of a "second condition" according to the technology of the present disclosure. Examples of the first predetermined condition include a condition in which 80% or more of the advertisement sign image 77 is positioned in a specific area (in the example shown in Fig. 15, an upper right region) out of an upper left region, the upper right region, a lower left region, and a lower right region obtained by dividing the virtual viewpoint image 76 into two parts in an up-down direction and dividing the virtual viewpoint image 76 in a left-right direction, and an occupancy rate (= size of advertisement sign image 77/entire size of virtual viewpoint image 76) is 15% or more in the virtual viewpoint image 76. It should be noted that the method of deciding the divided region and the occupancy rate described as an example here are merely examples. For example, in a case in which the area of the virtual viewpoint image 76 is divided into a central part area and a peripheral part area, the first predetermined condition may be a condition in which the advertisement sign image 77 is positioned in the peripheral part area and the size is a size in which the entire advertisement sign image 77 fits in the peripheral part area. In addition, the condition of the ratio of the advertisement sign image 77 to be positioned in the specific area and/or the condition of the size of the advertisement sign image 77 may be a fixed value, or may be a variable value or the like that is changed in response to the instruction received by the reception device 50 and/or various conditions (for example, the imaging condition).

Here, the example is described in which both the size and the position of the advertisement sign image 77 in the virtual viewpoint image 76 satisfy the first predetermined condition, but this is merely an example, and the virtual viewpoint image generation unit 28C may perform, as the first control, control of including the advertisement sign image 77 in the virtual viewpoint image 76 by deciding the viewpoint information 74 based on the positional information 39 within a range in which one of the size or the position of the advertisement sign image 77 in the virtual viewpoint image 76 satisfy a first predetermined condition.

According to the second modification example, it is possible to further suppress the inclusion of the advertisement sign image 77 in the virtual viewpoint video 78 at the size and/or the position that is not intended by a side (for example, the advertiser) that provides the advertisement sign image 77 to the user 14 as compared to a case in which the first control is performed in the virtual viewpoint video 78 irrespective of both the size and the position of the advertisement sign image 77.

### [Third Modification Example]

In the embodiment described above, the control of including the advertisement sign image 77 in the virtual viewpoint image 76 regardless of an attribute of the advertisement sign 6 is described as an example of the first control, but the technology of the present disclosure is not limited to this. For example, priorities of displaying may be given to the plurality of advertisement signs 6 (see Fig. 2), and the virtual viewpoint image generation unit 28C may perform the first control based on the priorities of displaying in a case in which the plurality of advertisement signs 6 given with the priorities of displaying are imaged in the captured image 64. Here, the priority of displaying means, for example, the priority of being displayed on the display 18. Hereinafter, for convenience of description, the priority of displaying will be simply referred to as a "priority".

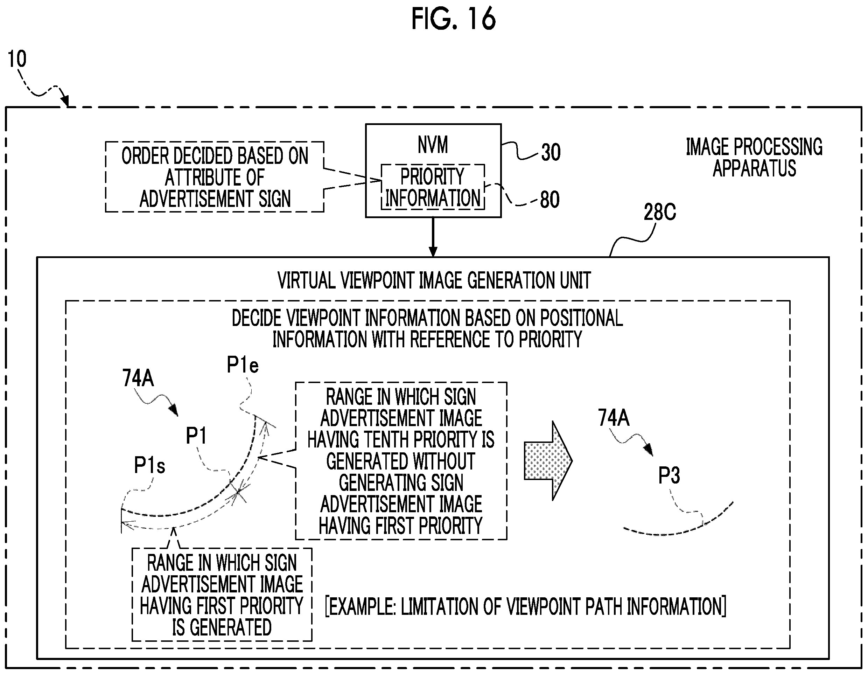

As an example, as shown in Fig. 16, priority information 80 is stored in the NVM 30. The priority information 80 is information indicating the priorities of the plurality of advertisement signs 6. The virtual viewpoint image generation unit 28C acquires the priority information 80 from the NVM 30. Then, the virtual viewpoint image generation unit 28C performs, as the first control, control of including the advertisement sign image 77 in the virtual viewpoint image 76 by deciding the viewpoint information 74 based on the positional information 39 with reference to the priority information 80 acquired from the NVM 30.

For example, in a case in which the viewpoint path P1 is divided into a range in which the advertisement sign image 77 showing the advertisement sign 6 having the first priority is generated and a range in which the advertisement sign image 77 showing the advertisement sign 6 having the tenth priority is generated without generating the advertisement sign image 77 showing the advertisement sign 6 having the first priority, the virtual viewpoint image generation unit 28C generates the viewpoint path information 74A indicating a viewpoint path P3 in which the viewpoint path P1 is limited only to the range in which the advertisement sign image 77 showing the advertisement sign 6 having the first priority is generated. In this case, the virtual viewpoint video 78 including the advertisement sign image 77 showing the advertisement sign 6 having the first priority is generated by the virtual viewpoint image generation unit 28C. The virtual viewpoint video 78 generated in this manner is displayed on the display 18. In addition, for example, in a case in which a part of the advertisement sign image 77 showing the advertisement sign 6 having the first priority is generated and a part of the advertisement sign image 77 showing the advertisement sign 6 having the tenth priority is generated at a certain viewpoint position on the viewpoint path P1, the virtual viewpoint image generation unit 28C may change the viewpoint position to the viewpoint position at which the all the advertisement sign images 77 showing the advertisement sign 6 having the first priority are generated and the viewpoint position at which the advertisement sign image 77 showing the advertisement sign 6 having the tenth priority is not generated.

According to the third modification example, in a case in which the plurality of advertisement signs 6 are imaged in the captured image 64, it is possible to show the user 14 the advertisement sign image 77 showing the advertisement sign 6 decided according to the priority.

In addition, in the third modification example, the priority is decided based on the attribute of the advertisement sign 6. Examples of the attribute of the advertisement sign 6 include a charge for the advertisement sign 6. That is, the priority is higher as the charge of the advertisement sign 6 is higher. In this case, the advertisement sign image 77 can be shown to the user 14 according to the priority decided based on the attribute of the advertisement sign 6.

It should be noted that the attribute of the advertisement sign 6 is not limited to the charge, and for example, a size of the advertisement sign 6, a type of the advertiser of the advertisement sign 6, information drawn on the advertisement sign 6, and/or a background of the advertisement sign 6 may be used.

### [Fourth Modification Example]

In the third modification example described above, the form example is described in which the priority is decided based on the attribute of the advertisement sign 6, but the technology of the present disclosure is not limited to this. For example, the priority may be decided based on an attribute of the user 14 who sets the viewpoint information 74.

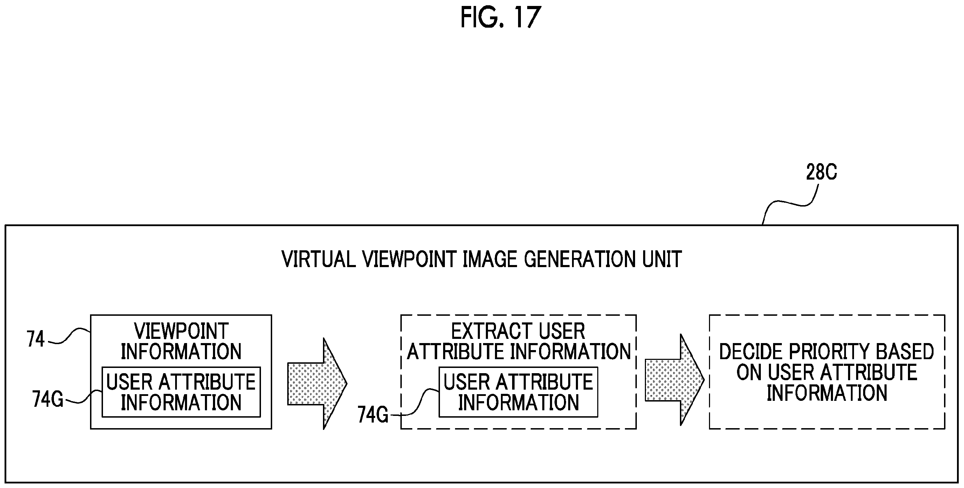

In this case, as shown in Fig. 17 as an example, user attribute information 74G indicating the attribute of the user 14 (for example, the user 14 who indicates the viewpoint in the viewpoint setting mode and indicates the gaze point in the gaze point setting mode) who sets the viewpoint information 74 is included in the viewpoint information 74. The attribute of the user 14 refers to, for example, gender, age, a hometown, a supporting team, an occupation, clothing, race, belongings, and/or a favorite player name of the user 14.

The virtual viewpoint image generation unit 28C extracts the user attribute information 74G from the viewpoint information 74. Then, the virtual viewpoint image generation unit 28C decides the priority based on the user attribute information 74G extracted from the viewpoint information 74. For example, in a case in which the attribute of the user 14 is a woman, the priority of the advertisement sign 6 that matches the preference of the woman is set higher than the priority of the other advertisement signs 6, so that the advertisement sign image 77 showing the advertisement sign 6 that matches the preference of the woman is more easily included in the virtual viewpoint video 78 than the advertisement sign image 77 showing the advertisement sign 6 other than the advertisement sign 6 that matches the preference of the woman.

According to the fourth modification example, as compared to a case in which the priority is decided irrespective of the attribute of the user 14 who sets the viewpoint information 74, the advertisement sign image 77 that matches the preference of the user 14 can be easily shown to the user 14.

### [Fifth Modification Example]

In the fourth modification example described above, the form example is described in which the priority is decided based on the attribute of the user 14, but the technology of the present disclosure is not limited to this. For example, the priority may be decided based on a state of an imaging target imaged by the plurality of imaging apparatuses 36.

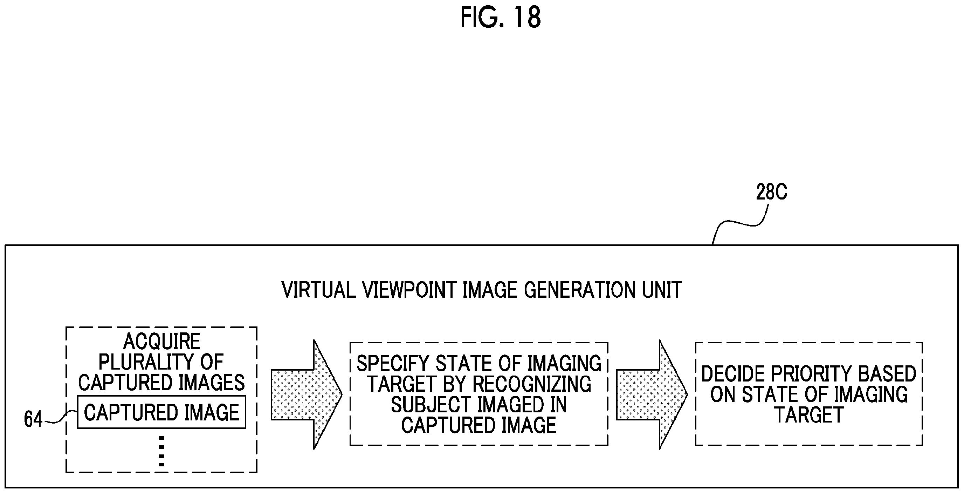

In this case, as shown in Fig. 18 as an example, the virtual viewpoint image generation unit 28C acquires the plurality of captured images 64. The virtual viewpoint image generation unit 28C specifies the state of the imaging target by recognizing the subject imaged in the plurality of captured images 64. Examples of the subject recognition method include a subject recognition method using AI and a subject recognition method using template matching. The virtual viewpoint image generation unit 28C decides the priority based on the specified state of the imaging target.

Here, the state of the imaging target refers to, for example, a degree of density of a plurality of moving objects (for example, a plurality of persons). The degree of density is represented by, for example, a population density. For example, as the priorities for the plurality of advertisement signs 6, a priority in a case in which the degree of density is higher than a predetermined value and a priority in a case in which the degree of density is equal to or lower than the predetermined value are decided in advance, the virtual viewpoint image generation unit 28C decides whether to use the priority in a case in which the degree of density is higher than the predetermined value or to use the priority in a case in which the degree of density is equal to or lower than the predetermined value, according to the specified degree of density. The predetermined value may be a fixed value, or may be a variable value that is changed in response to the instruction received by the reception device 50 and/or various conditions (for example, the imaging condition).

According to the fifth modification example, the advertisement sign image 77 can be shown to the user 14 according to the priority decided based on the state of the imaging target imaged by the plurality of imaging apparatuses 36.

It should be noted that, here, the degree of density is described as an example of the state of the imaging target, but this is merely an example, and the state of the imaging target may be, for example, a speed of the movement of the subject, a size of the subject, a position of the subject, a brightness of the subject, and/or a type of the subject.

### [Sixth Modification Example]

In the embodiment described above, the control of including the advertisement sign image 77 in the virtual viewpoint image 76 is described as an example of the first control. However, in a case in which the image showing only a back side (for example, a side on which no information that the advertiser wants to transmit is drawn) of the advertisement sign 6 is included as the advertisement sign image 77 in the virtual viewpoint image 76, an advertising effect intended by the advertiser cannot be expected.

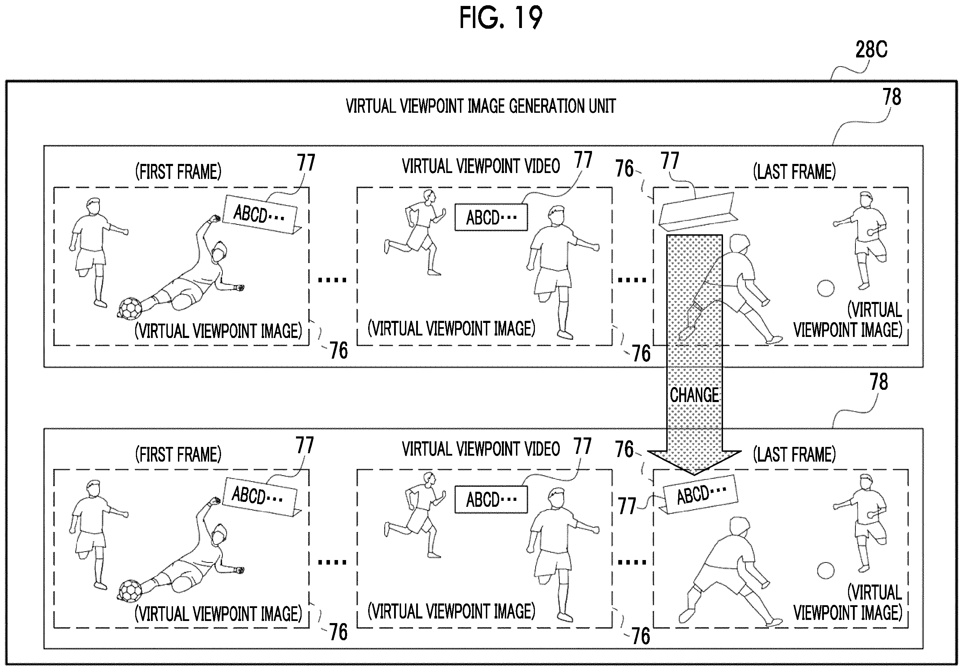

Therefore, as shown in Fig. 19 as an example, the virtual viewpoint image generation unit 28C changes a display aspect of the advertisement sign image 77 based on the viewpoint information 74 and the positional information 39. In this case, for example, the virtual viewpoint image generation unit 28C determines whether or not the image showing only the back side of the advertisement sign 6 is included as the advertisement sign image 77 in the virtual viewpoint image 76 with reference to the viewpoint information 74 and the positional information 39. In a case in which the virtual viewpoint image generation unit 28C determines that the image showing only the back side of the advertisement sign 6 is included as the advertisement sign image 77 in the virtual viewpoint image 76, the virtual viewpoint image generation unit 28C performs control of including the image showing a front side (for example, a side on which the information that the advertiser wants to transmit is drawn) of the advertisement sign 6 in the virtual viewpoint image 76.

In the sixth modification example, the advertisement sign image 77 of which the display aspect is changed based on the viewpoint information 74 and the positional information 39 can be shown to the user 14.

Here, the form example is described in which the virtual viewpoint image generation unit 28C changes the direction of the advertisement sign image 77, but the technology of the present disclosure is not limited to this. The virtual viewpoint image generation unit 28C may change the display aspect of the advertisement sign image 77 by changing the size of the advertisement sign image 77 to be equal to or larger than a standard size or emphasizing an outline of the advertisement sign image 77 in a case in which the size of the advertisement sign image 77 included in the virtual viewpoint image 76 is smaller than the standard size with reference to the viewpoint information 74 and the positional information 39.

### [Seventh Modification Example]

In the embodiment described above, the first control is described as an example, but this is merely an example, and second control may be performed instead of the first control or in combination with the first control. Here, the second control refers to control of including the advertisement sign image 77 in the virtual viewpoint image 76 by moving the advertisement sign image 77 based on the positional information 39.

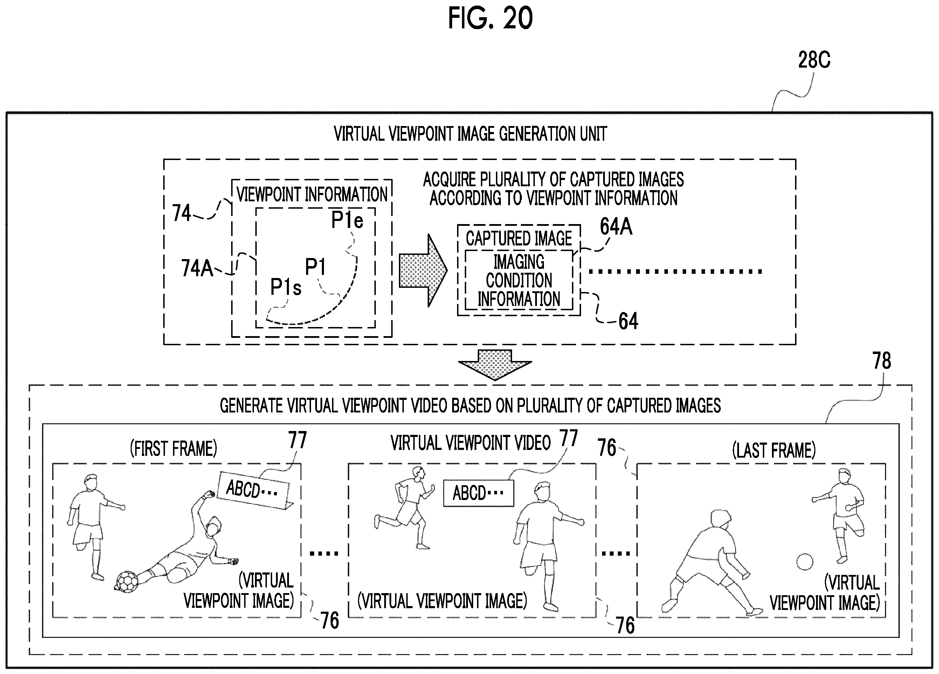

As shown in Fig. 20 as an example, in a case in which the virtual viewpoint image generation unit 28C acquires the plurality of captured images 64 according to the viewpoint information 74 (in the example shown in Fig. 20, the information including the viewpoint path information 74A indicating the viewpoint path P1), and generates the virtual viewpoint video 78 based on the acquired plurality of captured images 64, the advertisement sign image 77 may not be included in the virtual viewpoint image 76 of at least the last frame included in the virtual viewpoint video 78.

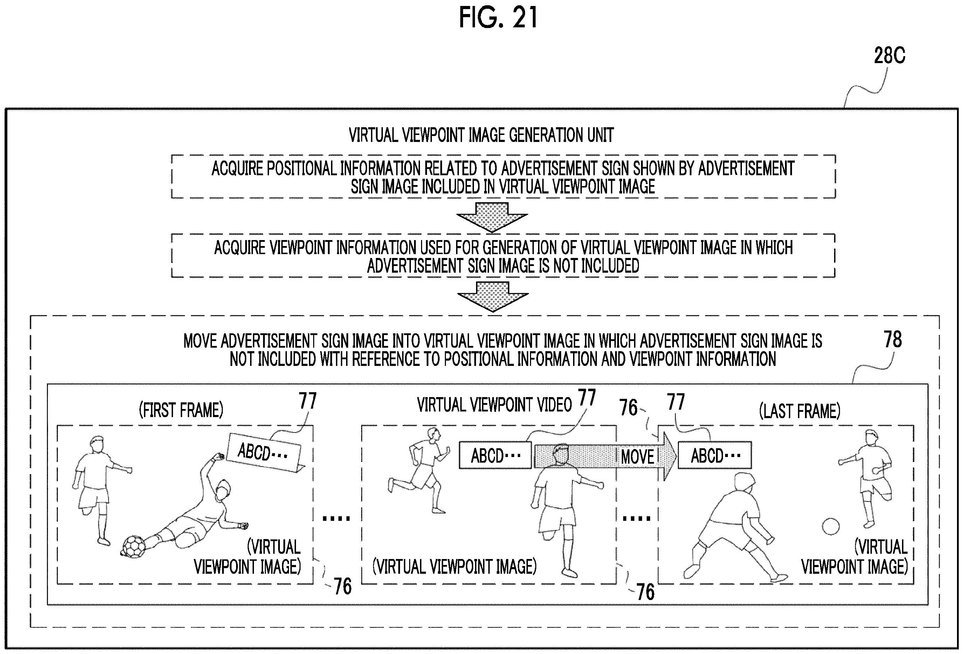

Therefore, in this case, the virtual viewpoint image generation unit 28C performs the second control. In this case, as shown in Fig. 21 as an example, first, the virtual viewpoint image generation unit 28C acquires, from the NVM 30, the positional information 39 related to the advertisement sign 6 shown by the advertisement sign image 77 included in the virtual viewpoint image 76 other than the virtual viewpoint image 76 in which the advertisement sign image 77 in the virtual viewpoint video 78 is not included. Next, the virtual viewpoint image generation unit 28C acquires the viewpoint information 74 used for the generation of the virtual viewpoint image 76 (for example, the virtual viewpoint image 76 of the last frame) in which the advertisement sign image 77 is not included. Then, the virtual viewpoint image generation unit 28C moves the advertisement sign image 77 in the virtual viewpoint image 76 of another frame into the virtual viewpoint image 76 in which the advertisement sign image 77 is not included, with reference to the positional information 39 and the viewpoint information 74. For example, the virtual viewpoint image generation unit 28C moves the advertisement sign image 77 showing the advertisement sign 6 that is present at the closest position to the angle of view specified from the angle-of-view information 74F (see Fig. 8) included in the viewpoint information 74 used for the generation of the virtual viewpoint image 76 (for example, the virtual viewpoint image 76 of the last frame) in which the advertisement sign image 77 is not included, into the virtual viewpoint image 76 in which the advertisement sign image 77 is not included. As a result, the advertisement sign image 77 can be more easily included in the virtual viewpoint video 78 than in a case in which only the virtual viewpoint video 78 is simply generated irrespective of the position of the advertisement sign 6.

It should be noted that it is possible to apply the second modification example described above to the seventh modification example. That is, the virtual viewpoint image generation unit 28C may perform the second control based on at least one of the size or the position of the advertisement sign image 77 in the virtual viewpoint image 76 generated based on the viewpoint information 74. In this case, it is possible to further suppress the inclusion of the advertisement sign image 77 in the virtual viewpoint video 78 at the size and/or the position that is not intended by a side (for example, the advertiser) that provides the advertisement sign image 77 to the user 14 than a case in which the second control is performed in the virtual viewpoint video 78 irrespective of both the size and the position of the advertisement sign image 77.

In addition, it is possible to apply the third modification example described above to the seventh modification example. That is, the priorities may be given to the plurality of advertisement signs 6 (see Fig. 2), and the virtual viewpoint image generation unit 28C may perform the second control based on the priorities in a case in which the plurality of advertisement signs 6 given with the priorities are imaged in the captured image 64. In this case as well, the same effect as the effect of the third modification example is obtained.

It should be noted that the priority may be decided based on the attribute of the advertisement sign 6. In addition, in the seventh modification example, the priority may be decided by the methods described in the fourth modification example and the fifth modification example. In addition, in the seventh modification example, the display aspect of the advertisement sign image 77 may be changed by the method described in the sixth modification example.

### [Eighth Modification Example]

In the embodiment described above, the first control is described as an example, but this is merely an example, and third control may be performed instead of the first control or in combination with the first control. In addition, the third control may be performed instead of the second control described in the seventh modification example, or together with the second control. Here, the third control refers to control of including the advertisement sign image 77 in the virtual viewpoint image 76 by changing the viewpoint information 74 based on the positional information 39.

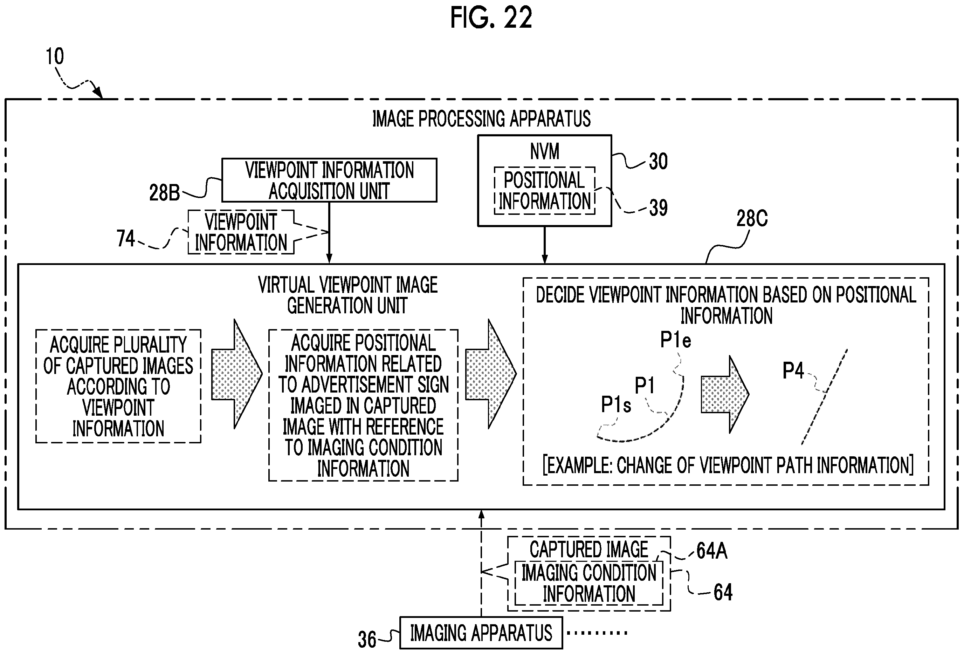

As shown in Fig. 22 as an example, as in the embodiment described above, the virtual viewpoint image generation unit 28C acquires the plurality of captured images 64 from the plurality of imaging apparatuses 36 according to the viewpoint information 74 received by the viewpoint information acquisition unit 28B. That is, the virtual viewpoint image generation unit 28C acquires the plurality of captured images 64 from the plurality of imaging apparatuses 36, which are used for the generation of the virtual viewpoint image 76 (see Fig. 11) showing the aspect of the subject in a case in which the subject is observed according to the viewpoint information 74. The virtual viewpoint image generation unit 28C acquires the positional information 39 related to the advertisement sign 6 of which the entirety imaged in the captured image 64 from the NVM 30 with reference to the imaging condition information 64A included in each captured image 64.

The virtual viewpoint image generation unit 28C performs, as the third control, the control of including the advertisement sign image 77 in the virtual viewpoint image 76 by deciding the viewpoint information 74 received by the viewpoint information acquisition unit 28B based on the positional information 39. In the eighth modification example, the change of the viewpoint path information 74A is described as an example of the decision of the viewpoint information 74. That is, the virtual viewpoint image generation unit 28C changes the viewpoint path information 74A such that the advertisement sign 6 is imaged in the virtual viewpoint image 76. In this case, for example, as shown in Fig. 22, the viewpoint path P1 is changed to a viewpoint path P4. In addition, the starting point positional information and/or the end point positional information in the viewpoint path information 74A may be changed. It should be noted that, here, the change of the viewpoint path information 74A is described as an example, but this is merely an example, and the visual line direction information 74B and/or the angle-of-view information 74F may be changed such that the advertisement sign 6 is imaged in the virtual viewpoint image 76.

According to the eighth modification example, the advertisement sign image 77 can be more easily included in the virtual viewpoint video 78 than in a case in which only the virtual viewpoint video 78 is simply generated irrespective of the position of the advertisement sign 6.

In addition, it is possible to apply the third modification example described above to the eighth modification example. That is, the priorities may be given to the plurality of advertisement signs 6 (see Fig. 2), and the virtual viewpoint image generation unit 28C may perform the third control based on the priorities in a case in which the plurality of advertisement signs 6 given with the priorities are imaged in the captured image 64. In this case as well, the same effect as the effect of the third modification example is obtained.

In a case in which the third modification example described above is applied to the eighth modification example, the priority may be decided based on the attribute of the advertisement sign 6. In addition, in the eighth modification example, the priority may be decided by the methods described in the fourth modification example and the fifth modification example. In addition, in the eighth modification example, the display aspect of the advertisement sign image 77 may be changed by the method described in the sixth modification example.

In addition, it is also possible to apply the second modification example described above to the eighth modification example. That is, the virtual viewpoint image generation unit 28C may perform the third control based on at least one of the size or the position of the advertisement sign image 77 in the virtual viewpoint image 76 generated based on the viewpoint information 74. In this case, it is possible to further suppress the inclusion of the advertisement sign image 77 in the virtual viewpoint video 78 at the size and/or the position that is not intended by a side (for example, the advertiser) that provides the advertisement sign image 77 to the user 14 than a case in which the second control is performed in the virtual viewpoint video 78 irrespective of both the size and the position of the advertisement sign image 77.

### [Ninth Modification Example]

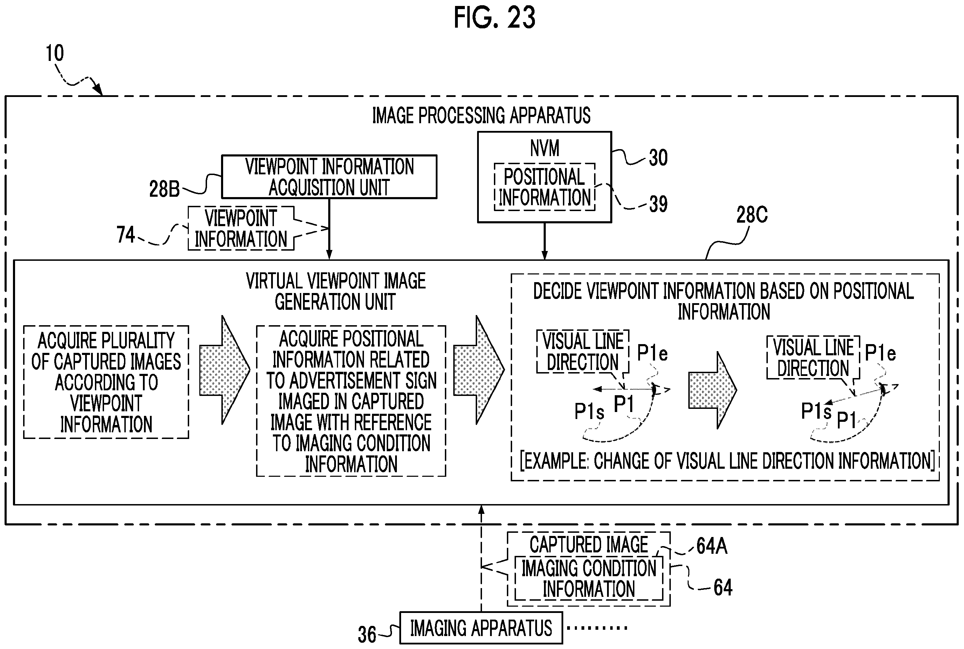

In the eighth modification example, as an example, the form example is described in which the viewpoint path information 74A is changed, but the technology of the present disclosure is not limited thereto. For example, the visual line direction information 74B may be changed based on the positional information 39 at the position of the starting point P1s and/or the position of the end point P1e of the viewpoint path P1 indicated by the viewpoint path information 74A. In this case, for example, as shown in Fig. 23, the virtual viewpoint image generation unit 28C changes the visual line direction at the position of the end point P1e with reference to the positional information 39 such that the advertisement sign image 77 is included in the virtual viewpoint image 76 at the position of the end point P1e. In the example shown in Fig. 23, the aspect is shown in which the visual line direction is changed at the position of the end point P1e, but the visual line direction may be changed at the position of the starting point P1s.

According to the ninth modification example, as compared to a case in which the visual line direction is fixed in one direction at the position of the starting point P1s of the viewpoint path P1 and the position of the end point P1e of the viewpoint path P1, the advertisement sign image 77 can be easily included in the virtual viewpoint video 78.

In addition, it is possible to apply the third modification example described above to the ninth modification example. That is, the priorities may be given to the plurality of advertisement signs 6 (see Fig. 2), and the virtual viewpoint image generation unit 28C may perform the third control based on the priorities in a case in which the plurality of advertisement signs 6 given with the priorities are imaged in the captured image 64. In this case as well, the same effect as the effect of the third modification example is obtained.

In a case in which the third modification example described above is applied to the ninth modification example, the priority may be decided based on the attribute of the advertisement sign 6. In addition, in the ninth modification example, the priority may be decided by the methods described in the fourth modification example and the fifth modification example. In addition, in the ninth modification example, the display aspect of the advertisement sign image 77 may be changed by the method described in the sixth modification example.

It should be noted that, in the ninth modification example, the form example is described in which the visual line direction is changed at the position of the starting point P1s and/or the position of the end point P1e of the viewpoint path P1, but the technology of the present disclosure is not limited to this, and the visual line direction may be changed at a position in the middle of the viewpoint path P1. For example, in a case in which the required time indicated by the required time information 74C (see Fig. 8) is equal to or longer than a first threshold value (for example, 30 seconds), the virtual viewpoint image generation unit 28C may change the visual line direction with reference to the positional information 39 such that the advertisement sign image 77 is included in the virtual viewpoint image 76 during a period until the required time elapses. In addition, for example, in a case in which the elapsed time indicated by the elapsed time information 74D (see Fig. 8) is equal to or longer than a second threshold value (for example, 10 seconds), the virtual viewpoint image generation unit 28C may change the visual line direction with reference to the positional information 39 such that the advertisement sign image 77 is included in the virtual viewpoint image 76 at a position of the viewpoint corresponding to the elapsed time information 74D indicating the elapsed time that is equal to or longer than the second threshold value. In addition, for example, in a case in which the movement speed specified from the movement speed information 74E (see Fig. 8) is equal to or higher than a third threshold value (for example, 1 meter/second), the virtual viewpoint image generation unit 28C may change the visual line direction with reference to the positional information 39 such that the advertisement sign image 77 is included in the virtual viewpoint image 76 at a position of the viewpoint corresponding to the movement speed that is equal to or higher than the third threshold value. In addition, for example, in a case in which a change amount per unit time of the angle of view specified from the angle-of-view information 74F (see Fig. 8) is equal to or larger than a fourth threshold value (for example, 30 degrees), the virtual viewpoint image generation unit 28C may change the visual line direction with reference to the positional information 39 such that the advertisement sign image 77 is included in the virtual viewpoint image 76 at a position of the viewpoint at which the change amount per unit time is equal to or larger than the fourth threshold value.

In addition, in addition to the change of the visual line direction, the size of the advertisement sign image 77 in the virtual viewpoint image 76 may be also changed at a position of the viewpoint at which the visual line direction is changed. The angle of view may also be changed. In this way, in a case in which the advertisement sign image 77 is emphasized and displayed at a timing at which the visual line direction is changed, it is possible to enhance the advertising effect of the advertisement sign image 77 for the user 14 as compared to a case in which the advertisement sign image 77 is not emphasized and displayed.

It should be noted that, in the examples described above, in a case in which the advertisement sign image 77 is not included in the virtual viewpoint image 76, the viewpoint information 74 is limited, the advertisement sign image 77 is moved, or the viewpoint information 74 is changed, but the technology of the present disclosure is not limited to this. For example, in a case in which a position specified from the positional information 39, that is the position of the advertisement sign 6 is not included in a region specified based on the viewpoint information 74 received by the viewpoint information acquisition unit 28B, the virtual viewpoint image generation unit 28C may change the positional information 39. In this case, even in a case in which the position specified from the positional information 39 is not included in the region specified based on the viewpoint information 74, the advertisement sign image 77 can be shown to the user 14. It should be noted that, here, the change of the positional information 39 is described as an example, but the technology of the present disclosure is not limited to this, and a position of the advertisement sign image 77 may be changed instead of the change of the positional information 39 or together with the change of the positional information 39.

In addition, for example, in a case in which the viewpoint information 74, which is received by the viewpoint information acquisition unit 28B, and the positional information 39 satisfy a first condition, the virtual viewpoint image generation unit 28C may change the positional information 39 and/or the position of the advertisement sign image 77.

Here, a first example of the first condition is a condition in which only a part (for example, 10% of the advertisement sign 6) of the advertisement sign 6 specified from the positional information 39 is included in the region specified based on the viewpoint information 74 received by the viewpoint information acquisition unit 28B. In addition, a second example of the first condition is a condition in which the advertisement sign 6 specified from the positional information 39 is included in a specific region (for example, a central part) of the region specified based on the viewpoint information 74 received by the viewpoint information acquisition unit 28B.

In a case in which the condition described as the first example of the first condition is satisfied, for example, the virtual viewpoint image generation unit 28C changes the positional information 39 and/or the position of the advertisement sign image 77 such that the entire advertisement sign 6 is included in the region specified based on the viewpoint information 74. In addition, in a case in which the condition described as the second example of the first condition is satisfied, for example, the virtual viewpoint image generation unit 28C changes the positional information 39 and/or the position of the advertisement sign image 77 such that the entire advertisement sign 6 is included in an end part of the region specified based on the viewpoint information 74.

With the configuration in which the virtual viewpoint image generation unit 28C changes the positional information 39 and/or the position of the advertisement sign image 77 in a case in which the viewpoint information 74, which is acquired by the viewpoint information acquisition unit 28B, and the positional information 39 satisfy the first condition, the advertisement sign image 77 can be shown to the user 14 according to a relationship between the viewpoint information 74 and the positional information 39.

In addition, in the examples described above, the virtual viewpoint image generation unit 28C generates the virtual viewpoint image 76, which is the image showing the aspect of the subject in a case in which the subject is observed from the viewpoint specified by the viewpoint information 74, based on the plurality of captured images 64 and the viewpoint information 74. However, the technology of the present disclosure is not limited to this, and the virtual viewpoint image generation unit 28C may cause an external device (for example, a server) connected to the image processing apparatus 10 in a communicable manner to generate the virtual viewpoint image 76, and may acquire the virtual viewpoint image 76 from the external device.

In addition, in the examples described above, the advertisement sign 6 is described as an example, but the technology of the present disclosure is not limited to this, and for example, clothing of a soccer player (clothing with advertisement inclusion), a balloon with advertisement inclusion, a mascot with advertisement inclusion, a flag with advertisement inclusion, and/or an object, such as an advertisement surface projected by a projector may be used. A specific object (for example, a three-dimensional object protected as a trademark) without advertisement inclusion may be used.

In addition, in the examples described above, the form example is described in which the virtual viewpoint image 76 includes the entire advertisement sign image 77, but the technology of the present disclosure is not limited to this, and the virtual viewpoint image 76 need only include a part (for example, equal to or more than half) of the advertisement sign image 77.

In addition, in the examples described above, the form example is described in which the image generation processing is executed by the computer 22 of the image processing apparatus 10, but the technology of the present disclosure is not limited to this. The image generation processing may be executed by the computer 40 of the user device 12, or the distributed processing may be performed by the computer 22 of the image processing apparatus 10 and the computer 40 of the user device 12.

In addition, in each of the examples described above, the computer 22 is described as an example, but the technology of the present disclosure is not limited to this. For example, instead of the computer 22, a device including an ASIC, an FPGA, and/or a PLD may be applied. Moreover, instead of the computer 22, a hardware configuration and a software configuration may be used in combination. The same applies to the computer 40 of the user device 12.

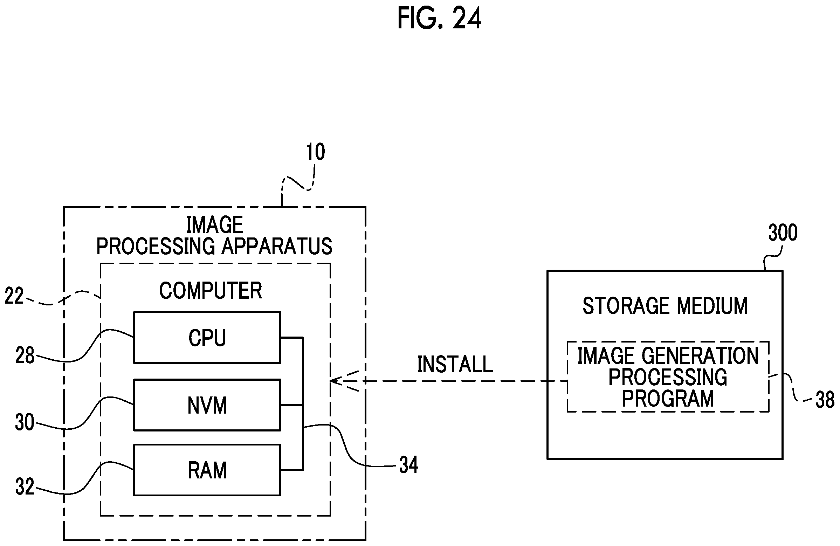

In addition, in the examples described above, the image generation processing program 38 is stored in the NVM 30, but the technology of the present disclosure is not limited to this, and as shown in Fig. 24 as an example, the image generation processing program 38 may be stored in any portable storage medium 300, such as an SSD or a USB memory, which is a non-transitorily storage medium. In this case, by installing the image generation processing program 38 stored in the storage medium 300 in the computer 22, and the CPU 28 executes the image generation processing according to the image generation processing program 38.

In addition, the image generation processing program 38 may be stored in a memory of another computer, a server device, or the like connected to the computer 22 via a communication network (not shown), and the image generation processing program 38 may be downloaded to the image processing apparatus 10 in response to a request from the image processing apparatus 10. In this case, the image generation processing is executed by the CPU 28 of the computer 22 according to the downloaded image generation processing program 38.

In addition, although the CPU 28 is described as an example in the examples described above, at least one CPU, at least one GPU, and/or at least one TPU may be used instead of the CPU 28 or together with the CPU 28.

The following various processors can be used as a hardware resource for executing the image generation processing. As described above, examples of the processor include the CPU, which is a general-purpose processor that functions as the hardware resource for executing the image generation processing according to software, that is, the program. In addition, another example of the processor includes a dedicated electric circuit which is a processor having a circuit configuration specially designed for executing the dedicated processing, such as the FPGA, the PLD, or the ASIC. The memory is built in or connected to any processor, and any processor executes the image generation processing by using the memory.

The hardware resource for executing the image generation processing may be configured by one of these various processors, or may be configured by a combination (for example, a combination of a plurality of FPGAs or a combination of the CPU and the FPGA) of two or more processors of the same type or different types. In addition, the hardware resource for executing the image generation processing may be one processor.

A first example in which the hardware resource is configured by one processor is a form in which one processor is configured by a combination of one or more CPUs and software, and the processor functions as the hardware resource for executing the image generation processing, as represented by a computer, such as a client and a server. A second example thereof is a form in which a processor that realizes the functions of the entire system including a plurality of hardware resources for executing the image generation processing with one IC chip is used, as represented by SoC. As described above, the image generation processing is realized by using one or more of the various processors as the hardware resources.

Further, as the hardware structures of these various processors, more specifically, an electric circuit in which circuit elements, such as semiconductor elements, are combined can be used.

Also, the image generation processing described above is merely an example. Therefore, it is needless to say that unnecessary steps may be deleted, new steps may be added, or the processing order may be changed within a range that does not deviate from the gist.

The described contents and the shown contents are the detailed description of the parts according to the technology of the present disclosure, and are merely examples of the technology of the present disclosure. For example, the description of the configuration, the function, the action, and the effect are the description of examples of the configuration, the function, the action, and the effect of the parts according to the technology of the present disclosure. Accordingly, it is needless to say that unnecessary parts may be deleted, new elements may be added, or replacements may be made with respect to the described contents and the shown contents within a range that does not deviate from the gist of the technology of the present disclosure. In addition, in order to avoid complications and facilitate understanding of the parts according to the technology of the present disclosure, the description of common technical knowledge or the like, which does not particularly require the description for enabling the implementation of the technology of the present disclosure, is omitted in the described contents and the shown contents.

In the present specification, "A and/or B" is synonymous with "at least one of A or B". That is, "A and/or B" means that it may be only A, only B, or a combination of A and B. In addition, in the present specification, in a case in which three or more matters are associated and expressed by "and/or", the same concept as "A and/or B" is applied.

All documents, patent applications, and technical standards described in the present specification are incorporated into the present specification by reference to the same extent as in a case in which the individual documents, patent applications, and technical standards are specifically and individually stated to be described by reference.

## Claims

1. An image processing apparatus comprising:
a processor; and
a memory connected to or built in the processor,
wherein the processor
acquires a first virtual viewpoint image generated based on a plurality of captured images,
acquires viewpoint information,
acquires positional information of an object imaged in the captured image, and
acquires a second virtual viewpoint image in which an object image showing the object is included based on the viewpoint information and the positional information.

2. The image processing apparatus according to claim 1,
wherein the processor
acquires the viewpoint information by receiving the viewpoint information, and
performs first control of including the object image in the second virtual viewpoint image by deciding the received viewpoint information based on the positional information.

3. The image processing apparatus according to claim 2,
wherein the viewpoint information includes a first viewpoint path that is received.

4. The image processing apparatus according to claim 2,
wherein the viewpoint information is information for specifying a region shown by the second virtual viewpoint image, and
the processor acquires the viewpoint information by receiving the viewpoint information within a range in which a position specified from the positional information is included in the region.

5. The image processing apparatus according to claim 1,
wherein, in a case in which a position specified from the positional information is not included in a region specified based on the viewpoint information,
the processor changes at least one of the positional information or a position of the object image.

6. The image processing apparatus according to claim 1,
wherein, in a case in which the viewpoint information and the positional information satisfy a first condition,
the processor changes at least one of the positional information or a position of the object image.

7. The image processing apparatus according to any one of claims 1 to 6,
wherein the processor performs second control of including the object image in the second virtual viewpoint image by moving the object image based on the positional information.

8. The image processing apparatus according to any one of claims 1 to 7,
wherein the processor performs third control of including the object image in the second virtual viewpoint image by changing the viewpoint information based on the positional information.

9. The image processing apparatus according to claim 8,
wherein the viewpoint information includes at least one of starting point positional information for specifying a position of a starting point of a second viewpoint path, end point positional information for specifying a position of an end point of the second viewpoint path, first visual line direction information for specifying a first visual line direction, or angle-of-view information for specifying an angle of view.

10. The image processing apparatus according to claim 8 or 9,
wherein the viewpoint information includes second visual line direction information for specifying a second visual line direction, and
the third control includes control of including the object image in the second virtual viewpoint image by changing the second visual line direction information based on the positional information at at least one of a position of a starting point of a third viewpoint path or a position of an end point of the third viewpoint path as the viewpoint information.

11. The image processing apparatus according to any one of claims 2 to 4,
wherein the second virtual viewpoint image includes a first subject image showing a subject, and
the processor performs the first control within a range in which at least one of a size or a position of the first subject image in the second virtual viewpoint image satisfies a second condition.

12. The image processing apparatus according to claim 7,
wherein the processor performs the second control based on at least one of a size or a position of a second subject image showing a subject in a third virtual viewpoint image generated based on the viewpoint information.

13. The image processing apparatus according to any one of claims 8 to 10,
wherein the processor performs the third control based on at least one of a size or a position of a third subject image showing a subject in a third virtual viewpoint image generated based on the viewpoint information.

14. The image processing apparatus according to claim 2, 3, 4, or 11,
wherein a priority of displaying is given to the object, and
the processor performs the first control based on the priority in a case in which a plurality of the objects given with the priorities are imaged in the captured image.

15. The image processing apparatus according to claim 7 or 12,
wherein a priority of displaying is given to the object, and
the processor performs the second control based on the priority in a case in which a plurality of the objects given with the priorities are imaged in the captured image.

16. The image processing apparatus according to claim 8, 9, 10, or 13,
wherein a priority of displaying is given to the object, and
the processor performs the third control based on the priority in a case in which a plurality of the objects given with the priorities are imaged in the captured image.

17. The image processing apparatus according to any one of claims 14 to 16,
wherein the priority is decided based on an attribute of the object.

18. The image processing apparatus according to any one of claims 14 to 17,
wherein the processor decides the priority based on an attribute of a user who sets the viewpoint information.

19. The image processing apparatus according to any one of claims 14 to 18,
wherein the processor decides the priority based on a state of an imaging target imaged by the plurality of imaging apparatuses.

20. The image processing apparatus according to any one of claims 1 to 19,
wherein the processor changes a display aspect of the object image based on the viewpoint information and the positional information.

21. The image processing apparatus according to any one of claims 1 to 20,
wherein the processor outputs data for displaying the second virtual viewpoint image on a display for a time which is decided according to the viewpoint information.

22. An image processing method comprising:
acquiring a first virtual viewpoint image generated based on a plurality of captured images;
acquiring viewpoint information;
acquiring positional information of an object imaged in the captured image; and
acquiring a second virtual viewpoint image in which an object image showing the object is included based on the viewpoint information and the positional information.

23. A program causing a computer to execute a process comprising:
acquiring a first virtual viewpoint image generated based on a plurality of captured images;
acquiring viewpoint information;
acquiring positional information of an object imaged in the captured image; and
acquiring a second virtual viewpoint image in which an object image showing the object is included based on the viewpoint information and the positional information.
